(19) Europäisches Patentamt
European Patent Office
Office européen des brevets

(11) **EP 2 927 902 A1**

(12) **EUROPEAN PATENT APPLICATION**
published in accordance with Art. 153(4) EPC

(43) Date of publication:
07.10.2015 Bulletin 2015/41

(51) Int Cl.:
*G09G 5/00* (2006.01)      *G06F 3/048* (2013.01)
*G06F 3/14* (2006.01)      *G09G 5/14* (2006.01)
*G09G 5/36* (2006.01)      *G09G 5/38* (2006.01)
*H04N 5/66* (2006.01)

(21) Application number: 13859511.1

(22) Date of filing: 16.10.2013

(86) International application number:
PCT/JP2013/078023

(87) International publication number:
WO 2014/083953 (05.06.2014 Gazette 2014/23)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: 27.11.2012 JP 2012258785

(71) Applicant: Sony Corporation
Tokyo 108-0075 (JP)

(72) Inventor: SAKAI, Yusuke
Minato-Ku
Tokyo 108-0075 (JP)

(74) Representative: Körber, Martin Hans
Mitscherlich PartmbB
Patent- und Rechtsanwälte
Sonnenstrasse 33
80331 München (DE)

(54) **DISPLAY DEVICE, DISPLAY METHOD, AND COMPUTER PROGRAM**

(57)      Videos are to be displayed in parallel, without missing information or a decrease in efficiency in the usable display region.

The aspect ratio of the large screen of an information processing apparatus 100 is 16 : 9, which is compatible with a Hi-Vision video. In a case where the large screen is used in a portrait layout, if the large screen is divided into three small screens in the vertical direction, the aspect ratio of the small screens after the dividing is 9 : 16/3 = 16 : 9.48. With respect to the original video content at 16 : 9, the ratio in inches is 9/16 = 56.25% (the area ratio is $(9/16)^2$ = 31.64%). Accordingly, the usable display region can be efficiently used.

*FIG. 8*

**Description**

TECHNICAL FIELD

The technology disclosed in this specification relates to a display apparatus that displays videos in parallel, a display method, and a computer program.

BACKGROUND ART

In recent years, video display apparatuses such as Hi-Vision television receivers have widely spread. Some of the video display apparatuses have more than one video source, such as television broadcast reception tuners, a decoder for videos distributed over the Internet and the like, a Blu-ray Disc reproduction device, and the like. Such a video display apparatus is capable of displaying two or more pieces of video content in parallel.

Known conventional methods of displaying videos in parallel include PIP (Picture in Picture) by which a video is displayed in a child screen in a parent screen displaying a specific video in a display screen, and PAP (Picture and Picture) by which a video is displayed in a child screen outside a specific video in a display screen (see Patent Document 1, for example).

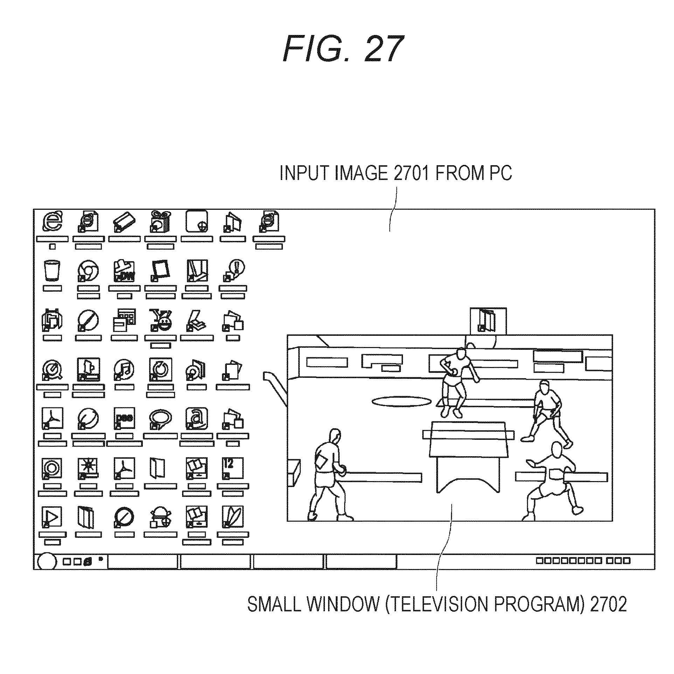

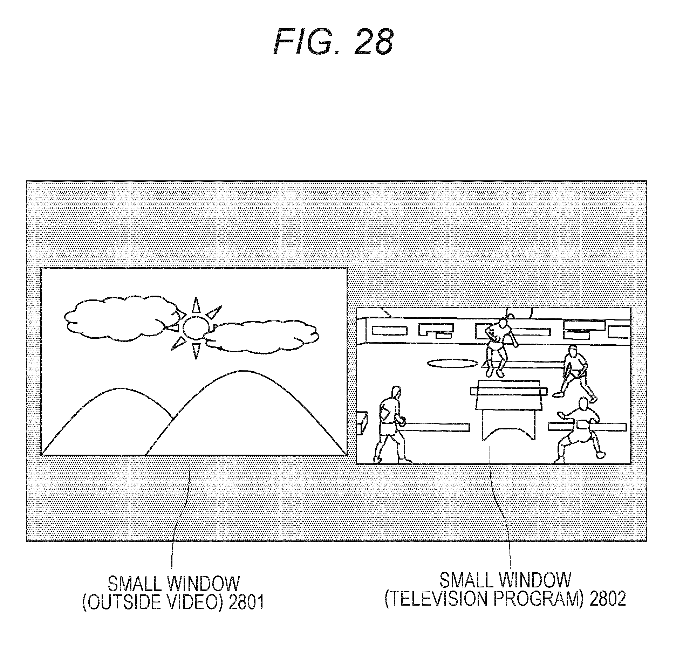

By the PIP function, a television program 2702 can be viewed in a small window while an input image 2701 from a PC (Personal Computer) is displayed on the screen, as shown in Fig. 27, for example. By the PAP function, an outside video 2801 from a Blu-ray Disc reproduction device or the like, and a television program 2802 can be displayed in small windows, as shown in Fig. 28, for example. Each of the small windows can be freely moved in the screen.

In the case of PIP, however, part of the information displayed on the parent screen is lost (or hidden), since the child screen is superimposed on the parent screen. In the case of PAP, the parent screen and the child screen are displayed in parallel in a limited display area. As a result, the use efficiency in the usable display region becomes lower. Where the parent screen and the child screen have the same aspect ratio as that of the display screen, there is inevitably an invalid region displaying black when the parent screen and the child screen are displayed without any overlaps.

Although the screens of displays have become larger in recent years, there is inevitably missing information and a decrease in use efficiency in the usable display region, as long as pieces of video content are displayed in parallel by the PIP function or the PAP function.

There is a suggested display apparatus that can freely put a large screen into a landscape-oriented state or a portrait-oriented state, and there is a suggested attachment device that attaches a screen in a rotatable state (see Patent Documents 2 through 4, for example).

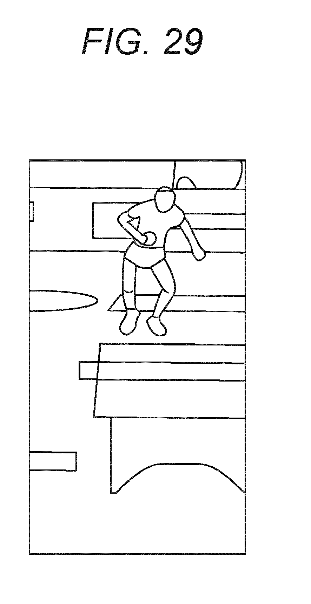

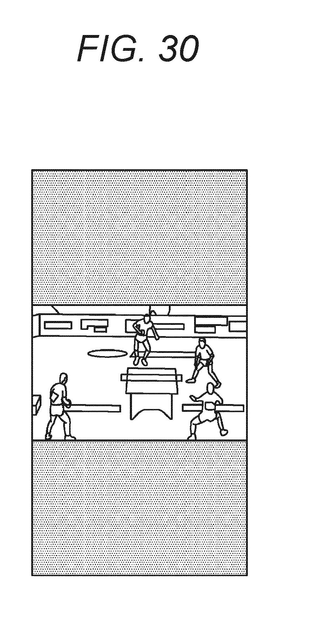

When a portrait-oriented photograph taken with a digital camera is viewed, or a portrait-oriented document such as A4 paper is displayed, the screen of the display apparatus is set in a portrait layout. However, most of the pieces of video content that are currently available, such as broadcast programs and movies, are landscape-oriented videos. Where a large screen is put into a landscape-oriented state, a landscape-oriented video can be viewed in a preferred manner. In a portrait layout, however, only part of the video is displayed (see Fig. 29), or the video needs to be reduced to the size that matches the width of the portrait-oriented screen (see Fig. 30). In the former case, some information is lost. In the latter case, the resolution becomes lower than that of the original image, and the use efficiency in the usable display region also becomes lower.

By PIP or PAP, a user needs to switch videos being displayed in parallel on the parent screen and the child screen, using a remote controller or the like. This is troublesome for the user. Furthermore, there is no interrelation between the videos being displayed on the parent screen and the child screen, and the channel of one screen does not change when the channel of the other screen is changed. Therefore, the user has to select a piece of video content for each screen, which is troublesome.

Also, videos are displayed only in a predetermined screen division pattern, such as on the parent screen and the child screen. In other words, there is no flexibility to allow display of a video in a desired size or with a desired aspect ratio.

CITATION LIST

PATENT DOCUMENTS

Patent Document 1: JP 3526056 B1
Patent Document 2: JP 11-24577 A
Patent Document 3: JP 2003-157016 A
Patent Document 4: JP 2011-17738 A

SUMMARY OF THE INVENTION

PROBLEMS TO BE SOLVED BY THE INVENTION

The technology disclosed in this specification aims to provide an excellent display apparatus, a display method, and a computer program that are capable of displaying videos in parallel without missing information and a decrease in efficiency in the usable display region.

The technology disclosed in this specification further aims to provide an excellent display apparatus, a display method, and a computer program that are capable of switching videos displayed in parallel on screens through efficient user operations.

SOLUTIONS TO PROBLEMS

The present application is made in view of the above problems, and the technology according to claim 1 is a display apparatus that includes:

a display unit that has a screen with a predetermined aspect ratio;
a content managing unit that manages pieces of content that can be displayed on the screen;
a content display control unit that controls display of content in accordance with a state of the screen; and
a display content selecting unit that selects content to be displayed on the screen from among the pieces of content being managed by the content managing unit, in accordance with an instruction from the content display control unit.

According to the technology disclosed in claim 2 of this application, the content display control unit of the display apparatus of claim 1 controls the number of pieces of content to be displayed in parallel on the screen, in accordance with a rotational position of the screen.

According to the technology disclosed in claim 3 of this application, the screen of the display apparatus of claim 1 has an aspect ratio of x : 1, which substantially holds x : 1 = a : x ("a" being an integer of 2 or greater). In response to setting of the screen in a portrait layout, the content display control unit divides the screen into "a" small screens in a vertical direction and displays pieces of content in parallel on the respective small screens.

According to the technology disclosed in claim 4 of this application, the screen of the display apparatus of claim 1 has an aspect ratio of 16 : 9. In response to setting of the screen in a portrait layout, the content display unit divides the screen into three small screens in a vertical direction and displays pieces of content in parallel on the respective small screens.

According to the technology disclosed in claim 5 of this application, the display content selecting unit of the display apparatus of claim 3 switches the pieces of content being displayed on the small screens in response to a user operation performed on the screen.

According to the technology disclosed in claim 6 of this application, in response to a pinching-in operation performed by a user on one of the small screens, the content display control unit of the display apparatus of claim 3 reduces the small screens in size, and causes the small screens to transit to a screen layout in which smallest screens are arranged in "$a^2$" rows and "a" columns.

According to the technology disclosed in claim 7 of this application, in response to a pinching-out or tapping operation performed by a user on one of the smallest screens, the content display control unit of the display apparatus of claim 6 causes the smallest screens to transit to a screen layout in which "a" small screens are arranged in the vertical direction.

According to the technology disclosed in claim 8 of this application, in response to a pinching-out or tapping operation performed by a user on one of the small screens, the content display control unit of the display apparatus of claim 3 enlarges the one of the small screens, so that display of a region of one "a"th in size in a horizontal direction transits to full-screen display on the screen in the portrait layout.

According to the technology disclosed in claim 9 of this application, in response to a pinching-in operation performed by a user on the screen displaying the enlarged one of the small screens, the content display control unit of the display apparatus of claim 8 causes the screen to transit to a screen layout in which "a" small screens are arranged in the vertical direction.

According to the technology disclosed in claim 10 of this application, in response to a dragging or flicking operation performed by a user on the screen showing the full-screen display, the content display control unit of the display apparatus of claim 8 moves the 1/a region being displayed on the screen in a direction of the dragging or flicking operation.

According to the technology disclosed in claim 11 of this application, the display apparatus of claim 3 further includes a content receiving unit that receives pieces of content that are broadcast on television. The content managing unit manages the received pieces of content based on channel numbers, and, in accordance with ascending order or descending order of channel number, the display content selecting unit selects respective pieces of content to be displayed on the "a" small screens arranged in the vertical direction.

According to the technology disclosed in claim 12 of this application, in response to a vertical flicking operation performed by a user on the screen, the display content selecting unit of the display apparatus of claim 11 sequentially increments or decrements the respective channel numbers of the pieces of content being displayed on the "a" small screens.

According to the technology disclosed in claim 13 of this application, in response to a horizontal flicking operation performed by a user on the screen, the display content selecting unit of the display apparatus of claim 11 increments or decrements, by "a", the respective channel numbers of the pieces of content being displayed on the "a" small screens.

According to the technology disclosed in claim 14 of this application, in response to a horizontal flicking operation that is performed after a user selects a specific small screen, the display content selecting unit of the display apparatus of claim 11 increments or decrements the channel number of the piece of content being displayed on the specific small screen, in accordance with the number of times the flicking operation is performed.

According to the technology disclosed in claim 15 of this application, the display content selecting unit of the display apparatus of claim 14 selects content so that pieces of content being displayed on two or more small screens do not have the same channel number.

According to the technology disclosed in claim 16 of this application, the display apparatus of claim 3 further includes a content receiving unit that receives pieces of content that are VOD-distributed. The content managing unit manages the pieces of content based on channel numbers in respective categories, and the display content selecting unit selects respective categories and channel numbers of the pieces of content to be displayed on the "a" small screens arranged in the vertical direction.

According to the technology disclosed in claim 17 of this application, in response to a vertical flicking operation performed by a user on the screen, the display content selecting unit of the display apparatus of claim 16 sequentially switches categories of the pieces of content being displayed on the "a" small screens.

According to the technology disclosed in claim 18 of this application, in response to a vertical flicking operation performed by a user on the screen, the display content selecting unit of the display apparatus of claim 16 sequentially switches categories of the pieces of content being displayed on the "a" small screens.

The technology disclosed in claim 19 of this application is a display method that includes:

a content management step of managing pieces of content that can be displayed on a screen having a predetermined aspect ratio;
a content display control step of controlling display of content in accordance with a state of the screen; and
a display content selection step of selecting content to be displayed on the screen from among the pieces of content being managed in the content managing step, in accordance with an instruction issued in the content display control step.

The technology disclosed in claim 20 of this application is a computer program written in a computer-readable format,
the computer program causing a computer to function as:

a content managing unit that manages pieces of content that can be displayed on a screen having a predetermined aspect ratio;
a content display control unit that controls display of content in accordance with a state of the screen; and
a display content selecting unit that selects content to be displayed on the screen from among the pieces of content being managed by the content managing unit, in accordance with an instruction from the content display control unit.

The computer program according to claim 20 of this application defines a computer program written in a computer-readable format so as to realize predetermined processing in a computer. In other words, as the computer program according to claim 20 of this application is installed into a computer, cooperative actions are realized in the computer, and the same effects as those of the display apparatus according to claim 1 of this application can be achieved.

EFFECTS OF THE INVENTION

The technology disclosed in this specification can provide an excellent display apparatus, a display method, and a computer program that are capable of displaying videos in parallel without missing information and a decrease in efficient in the usable display region by allotting different videos to three small screens obtained by dividing a large screen having an aspect ratio of 16 : 9 in a portrait layout into three in the vertical direction.

The technology disclosed in this specification can also provide an excellent display apparatus, a display method, and a computer program that are capable of switching videos displayed in parallel on screens through efficient user operations.

Other objects, features, and advantages of the technology disclosed in this specification will be made apparent by the embodiments described below and the detailed descriptions with reference to the accompanying drawings.

BRIEF DESCRIPTION OF DRAWINGS

Fig. 1 is a diagram showing an example of usage (Wall type: landscape layout) of an information processing apparatus 100 having a large screen.
Fig. 2 is a diagram showing an example of usage (Wall type: portrait layout) of an information processing apparatus 100 having a large screen.
Fig. 3 is a diagram showing another example of usage (Tabletop type) of an information processing apparatus 100 having a large screen.
Fig. 4 is a diagram showing usage of a display screen in a "Tabletop" state.
Fig. 5 is a diagram schematically showing the functional structure of the information processing apparatus 100.
Fig. 6 is a diagram showing the internal structure of an input interface unit 110.
Fig. 7 is a diagram showing the internal structure of an output interface unit 130.
Fig. 8 is a diagram showing a situation where three 16 : 9 videos are displayed in parallel in the vertical direction on the large screen in the portrait layout.
Fig. 9 is a diagram for explaining the aspect ratio that is the golden ratio for dividing the portrait layout into a few tiers.
Fig. 10 is a diagram showing an example user operation on the large screen in the portrait layout displaying three videos in parallel.

Fig. 11 is a diagram showing an example user operation on the large screen in the portrait layout displaying three videos in parallel.

Fig. 12 is a diagram for explaining a mechanism to arrange a large number of pieces of captured video content in a matrix fashion, and manage display outputs to three tiers of screens in the portrait layout.

Fig. 13 is a diagram for explaining a mechanism to arrange a large number of pieces of captured video content in a matrix fashion, and manage display outputs to three tiers of screens in the portrait layout.

Fig. 14 is a diagram for explaining a mechanism to arrange a large number of pieces of captured video content in a matrix fashion, and manage display outputs to three tiers of screens in the portrait layout.

Fig. 15 is a diagram showing examples of screen transitions that occur with rotation of the main frame of the information processing apparatus 100.

Fig. 16 is a diagram showing examples of screen transitions caused by user operations in a state where the large screen is in the portrait layout.

Fig. 17 is a diagram showing examples of screen transitions caused by user operations in a state where the large screen is in the portrait layout.

Fig. 18 is a diagram showing examples of screen transitions caused by user operations in a state where the large screen is in the portrait layout.

Fig. 19 shows a screen transition example using three-tier display in the portrait layout in selecting television broadcasting channels.

Fig. 20 shows a screen transition example using three-tier display in the portrait layout in selecting television broadcasting channels.

Fig. 21 shows a screen transition example using three-tier display in the portrait layout in selecting television broadcasting channels.

Fig. 22 shows a screen transition example using three-tier display in the portrait layout in selecting television broadcasting channels.

Fig. 23 shows a screen transition example using three-tier display in the portrait layout in a VOD distribution service.

Fig. 24 shows a screen transition example using three-tier display in the portrait layout in a VOD distribution service.

Fig. 25 shows a screen transition example using three-tier display in the portrait layout in a VOD distribution service.

Fig. 26 is a diagram schematically showing a functional structure for controlling display of content in accordance with the rotational position of the large screen in the information processing apparatus 100.

Fig. 27 is a diagram showing an example screen structure using a PIP function.

Fig. 28 is a diagram showing an example screen structure using a PAP function.

Fig. 29 is a diagram showing an example in which part of a video in a landscape format is displayed on a screen in a portrait layout.

Fig. 30 is a diagram showing an example in which a video in a landscape format is reduced and displayed on a screen in a portrait layout so that the video fits in with the screen width.

MODES FOR CARRYING OUT THE INVENTION

The following is a detailed description of embodiments of the technology disclosed in this specification, with reference to the drawings.

A. System Configuration

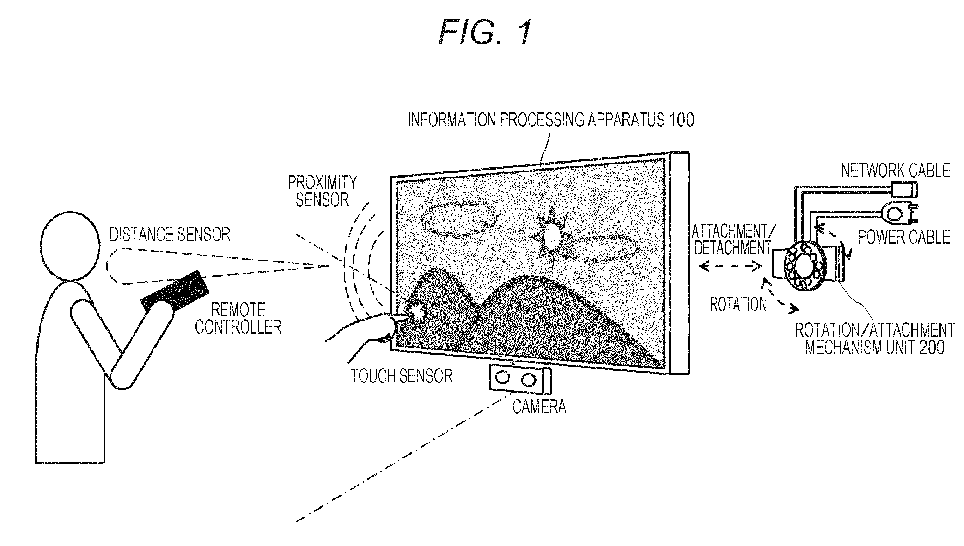

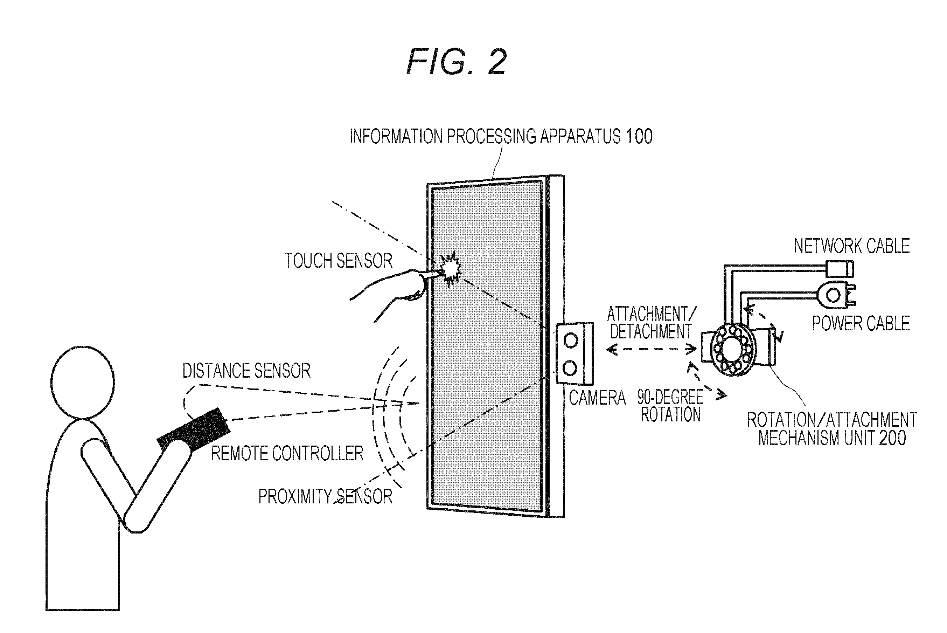

An information processing apparatus 100 according to this embodiment has a large screen, and the main types of usage thereof are assumed to be a "Wall" type that is hung on a wall as shown in Fig. 1, and a "Tabletop" type that is placed on a table as shown in Fig. 2.

In the "Wall" state shown in Fig. 1, the information processing apparatus 100 is rotatably and detachably attached to the surface of a wall with a rotation/attachment mechanism unit 200, for example. In the example shown in the drawing, the rotational position is set in such a position that the large screen is presented in a landscape layout.

The rotation/attachment mechanism unit 200 also serves as the electrical contact point between the information processing apparatus 100 and the outside, and a power cable and a network cable (both not shown) are connected to the information processing apparatus 100 via this rotation/attachment mechanism unit 200, so that the information processing apparatus 100 can receive drive power from a commercial AC power supply and access various kinds of servers on the Internet.

The information processing apparatus 100 includes a camera, a distance sensor, a proximity sensor, and a touch sensor, and can recognize the position (distance and orientation) of a user who is facing the screen. The information processing apparatus 100 also automatically selects an optimum interaction in accordance with the position of the user. For example, in accordance with the position of the user, the information processing apparatus 100 automatically selects or adjusts GUI (Graphical User Interface) display such as the density of the information to be displayed on the large screen. In accordance with the position of the user or the distance to the user, the information processing apparatus 100 can also automatically select an optimum input means from among several input means such as a direct operation involving a touch on the screen, proximity to the screen, a gesture with a hand, or a remote controller, and an indirect operation depending on a user state.

The information processing apparatus 100 also includes one or more cameras. In the example shown in the drawing, a camera is placed almost at the center of the bottom edge in the landscape layout. In this situation, the optical axis of the camera extends horizontally, and can capture an image of the user who is facing the large screen. The image captured by the camera is processed, so that the position of the user can be measured, and various things such as persons, objects, and machines can also be recognized. In accordance with a result of recognition of the face, a hand, or the like of the user in the image captured by the camera, a gesture input can also be made. The information processing apparatus 100 also includes an ultrashort-distance communication unit, and can exchange data with an apparatus such as a tablet terminal or a mobile terminal owned by a user who is located at a very short distance.

The aspect ratio of the large screen is assumed to be 16 : 9, which is the standard in the market of television products. Accordingly, in a situation where the rotational position of the information processing apparatus 100 hung on a wall is set so that the large screen is in the landscape layout as shown in Fig. 1, a landscape-oriented video at 16 : 9 can be displayed on the entire screen, to show almost the exact worldview shown in a "movie".

When the information processing apparatus 100 is attached to the rotation/attachment mechanism unit 200 and is rotated while being hung on a wall, the large screen can be positioned in a portrait layout as shown in Fig. 2. The position of the camera integrated with the main frame of the information processing apparatus 100 moves to almost the center of the right edge of the screen.

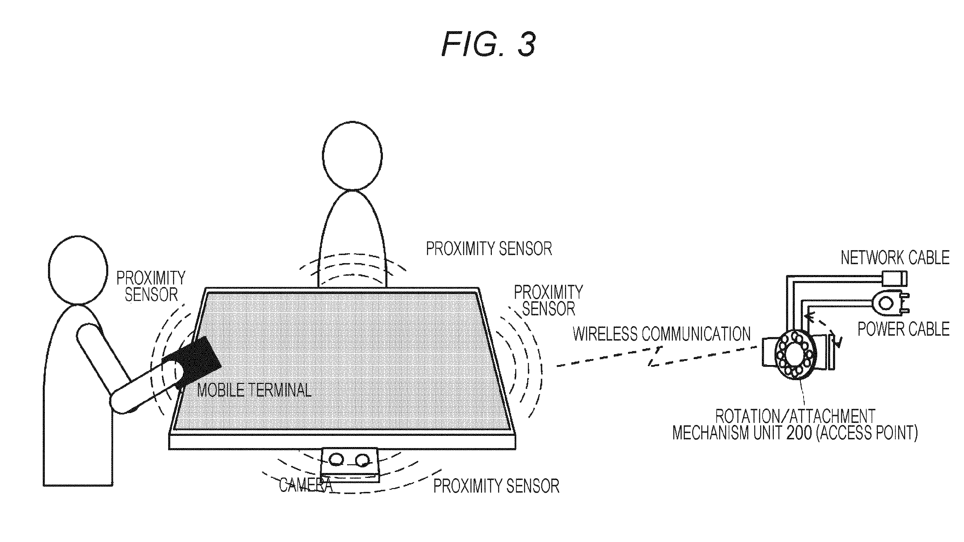

Meanwhile, in the "Tabletop" state shown in Fig. 3, the information processing apparatus 100 is placed flat on a table. While the rotation/attachment mechanism unit 200 also serves as the electrical contact point in the usage examples shown in Figs. 1 and 2 (described above), no electrical contact with the information processing apparatus 100 is not seen in the state where the information processing apparatus 100 is placed on a table as shown in Fig. 3. In the "Tabletop" state shown in the drawing, the information processing apparatus 100 may be designed to be driven by an internal battery (not shown), without any power supply. If the information processing apparatus 100 includes a wireless communication unit equivalent to a mobile station function of a wireless LAN (Local Area Network), for example, and the rotation/attachment mechanism unit 200 includes a wireless communication unit equivalent to an access point function of a wireless LAN, the information processing apparatus 100 can access, even in the "Tabletop" state, various servers on the Internet through wireless communication with the rotation/attachment mechanism unit 200 as an access point.

The information processing apparatus 100 includes a proximity sensor at each of the four side edges of the large screen, to detect the existence or the state of a user. As in the above described example, an image of a user who is located near the large screen may be captured by a camera, so that the person may be recognized. The ultrashort-distance communication unit determines whether the user whose existence has been detected owns an apparatus such as a mobile terminal, and detects a data transmission/reception request from the mobile terminal owned by the user.

Detecting the existence of a user with a proximity sensor or the like, the information processing apparatus 100 uses the detection results in UI control. If not only the existence of a user but also the positions of the torso, the hands and the legs, and the head of the user can be detected, the detection result can be used in more detailed UI control. The information processing apparatus 100 also includes the ultrashort-distance communication unit, and can exchange data with an apparatus owned by a user who is located at a very short distance.

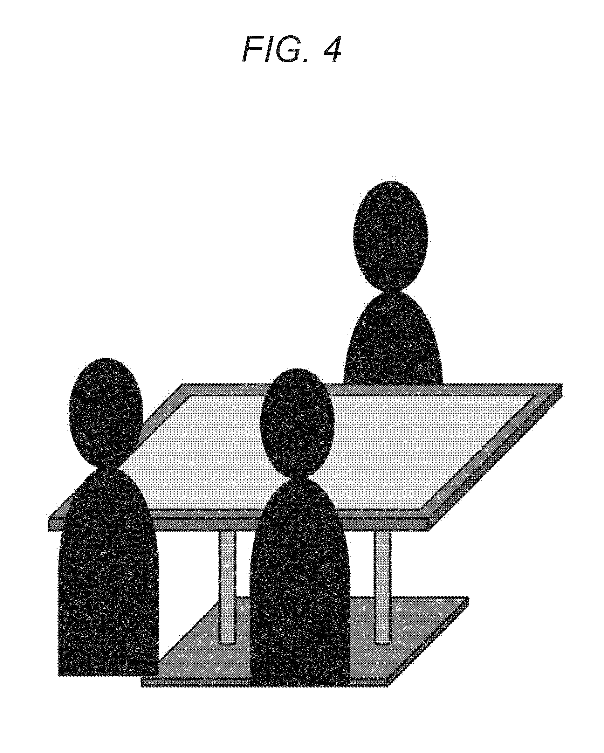

If the screen of the information processing apparatus 100 is made larger in size, an extra space enough to allow two or more users to make touch inputs at the same time in the "Tabletop" state is formed. Also, users can face one another across the large screen, and converse or have a discussion while looking at the display on the screen (see Fig. 4).

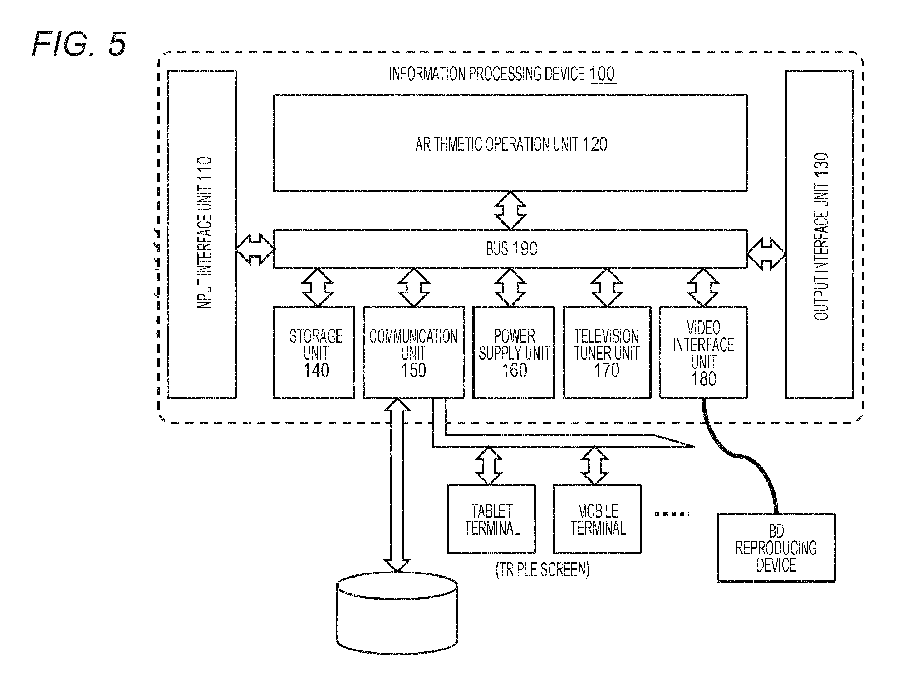

Fig. 5 schematically shows the functional structure of the information processing apparatus 100. The information processing apparatus 100 includes an input interface unit 110 to which an information signal from outside is input, an arithmetic operation unit 120 that performs arithmetic processing for display screen control or the like based on the input information signal, an output interface unit 130 that outputs information to the outside based on an arithmetic operation result, a large-capacity storage unit 140 formed with a hard disk drive (HDD) or the like, a communication unit 150 connected to an external network, a power supply unit 160 that handles drive power, a television tuner unit 170, and a video input interface (IF) unit 180, which are connected to one another via a bus 190. The storage unit 140 stores various processing algorithms to be executed by the arithmetic operation unit 120, and various databases to be used in arithmetic processing by the arithmetic operation unit 120.

The principal functions of the arithmetic operation unit 120 are arithmetic processing such as a UI screen generation process based on a result of user detection conducted by the input interface unit 110, a result of screen touch detection, and data received from an apparatus such as a mobile terminal owned by a user, and outputting of arithmetic operation results to the output interface unit 130. The arithmetic operation unit 120 loads an application program installed in the storage unit 140, for example, and then executes the application, so as to realize arithmetic processing for each application.

The communication unit 150 connects the information processing apparatus 100 to the external network such as a LAN or the Internet. The form of the connection to the external network may or may not involve a cable. For example, a video stream distributed from a distribution server (not shown) in the external network can be received via the communication unit 150, be decoded by the arithmetic operation unit 120, and be reproduced and output through the output interface unit 130.

Through the communication unit 150, the information processing apparatus 100 can also communicate with other apparatuses including a mobile terminal such as a smartphone owned by a user, a tablet terminal, and the like. A combination of the three kinds of apparatuses, the information processing apparatus 100, a mobile terminal, and a tablet terminal, can form a so-called "triple screen". The information processing apparatus 100 can provide a UI that makes the three screens coordinate with one another on a larger screen than the other two screens.

For example, while a user is performing an operation such as touching the screen or bringing his/her own terminal close to the information processing apparatus 100 in the background, data of a moving image, a still image, text content, or the like can be exchanged with an owned terminal compatible with the information processing apparatus 100. Further, a cloud server or the like is installed in the external network, and the triple screen can gain the benefit of cloud computing, such as using the computing capability of the cloud server, through the information processing apparatus 100.

The television tuner unit 170 selectively receives a digital broadcast signal transmitted as ground waves or satellite waves from each broadcasting station. The arithmetic operation unit 120 decodes received broadcast waves, and reproduces and outputs the broadcast waves through the output interface unit 130.

The video input interface unit 180 connects to an external Blu-ray Disc (BD) reproduction device or the like with an HDMI (a registered trade name) (High Definition Multimedia Interface), for example, and receives a video signal reproduced from a Blu-ray Disc. The arithmetic operation unit 120 decodes an input video signal, and reproduces and outputs the video signal through the output interface unit 130.

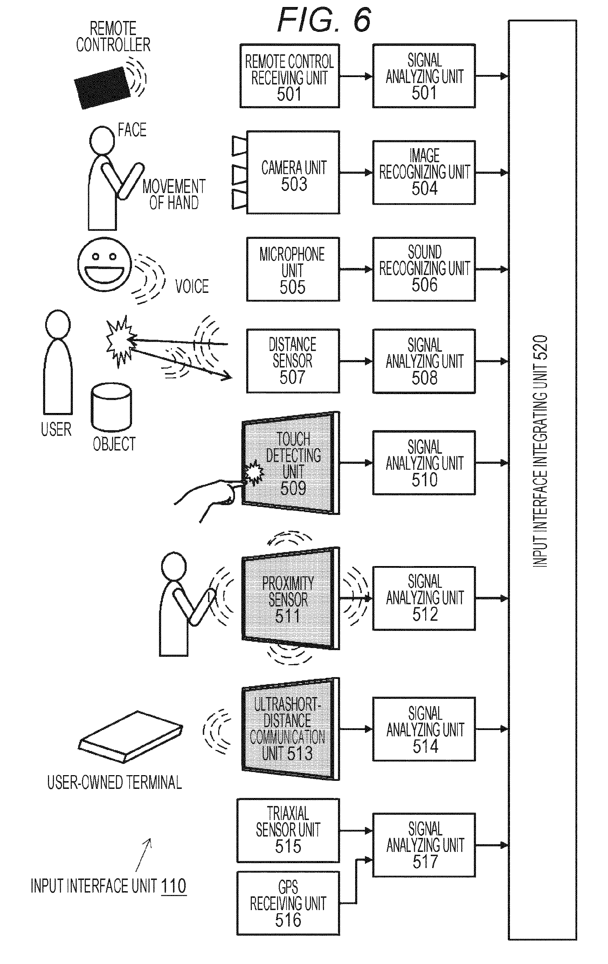

The principal functions of the input interface unit 110 are detection of the existence of a user, detection of a touch operation performed by the detected user on the screen or the touch panel, detection of an apparatus such as a mobile terminal owned by the user, and a process of receiving data transmitted from the apparatus. Fig. 6 shows the internal structure of the input interface unit 110.

A remote control receiving unit 501 receives a remote control signal from a remote controller or a mobile terminal. A signal analyzing unit 502 demodulates and decodes the received remote control signal, to obtain a remote control command.

A camera unit 503 includes an imaging device such as a CMOS (Complememtary Metal Oxide Semiconductor) or a CCD (Charge Coupled Device), and employs a monocular type, or a binocular and/or active type.

The camera unit 503 includes a camera control unit that controls panning, tilting, zooming, and the like. The camera unit 503 notifies the arithmetic operation unit 120 of camera information about panning, tilting, zooming, or the like, and can controls panning, tilting, or zooming of the camera unit 503 in accordance with camera control information supplied from the arithmetic operation unit 120.

An image recognizing unit 504 performs a recognition process on an image captured by the camera unit 503. Specifically, the image recognizing unit 504 recognizes a gesture by detecting the face of movement of a hand of a user from a background difference, recognizes an object such as the face or a hand of a user included in a captured image, or recognizes the distance to a user.

In an image recognition process, the image recognizing unit 504 scans a template image on an image captured by a camera of the camera unit 503, and performs pattern matching, to detect an object to be recognized, such as a face.

An audio input such as sound or a conversation of the user is input to a microphone unit 505. A sound recognizing unit 506 recognizes a sound signal input from the microphone unit 505.

A distance sensor 507 is formed with a PSD (Position Sensitive Detector), for example, and detects a signal returned from the user or some other object. A signal analyzing unit 508 analyzes the detected signal, and measures the distance to the user or the object. Other than a PDS sensor, a pyroelectric sensor, a simplified camera, or the like can be used as the distance sensor 507. The distance sensor 507 constantly monitors whether the user exists within a radius of five to ten meters from the information processing apparatus 100, for example. Therefore, a sensor device that consumes a small amount of power is preferably used as the distance sensor 507.

A touch detecting unit 509 is formed with a touch sensor placed on the screen, and outputs a detection signal from a point where the tip of the user's finger touches the screen. A signal analyzing unit 510 analyzes the detection signal from the touch detecting unit 509, to obtain location information.

A proximity sensor 511 is placed at each of the four side edges of the large screen, and detects the user who is in the proximity of the screen by an electrostatic capacitance method, for example. A signal analyzing unit 512 analyzes a detection signal from the proximity sensor 511.

An ultrashort-distance communication unit 513 receives a non-contact communication signal from an apparatus such as a mobile terminal owned by the user, through NFC (Near Field Communication), for example. A signal analyzing unit 514 demodulates and decodes the signal received by the ultrashort-distance communication unit 513, and obtains received data.

A triaxial sensor unit 515 is formed with a gyro and the like, and detects postures of the information processing apparatus 100 about the x-, y-, and z-axes. A GPS (Global Positioning System) receiving unit 516 receives a signal from a GPS satellite. A signal analyzing unit 517 analyzes the signals from the triaxial sensor unit 515 and the GPS receiving unit 516, and obtains location information and posture information about the information processing apparatus 100.

An input interface integrating unit 520 integrates inputs of the above information signals, and transfers the integrated signals to the arithmetic operation unit 120. The input interface integrating unit 520 also acquires location information about the user in the vicinity of the information processing apparatus 100 by integrating the results of the analyses conducted by the respective signal analyzing units 508, 510, 512, 514, and 517, and transfers the location information to the arithmetic operation unit 120.

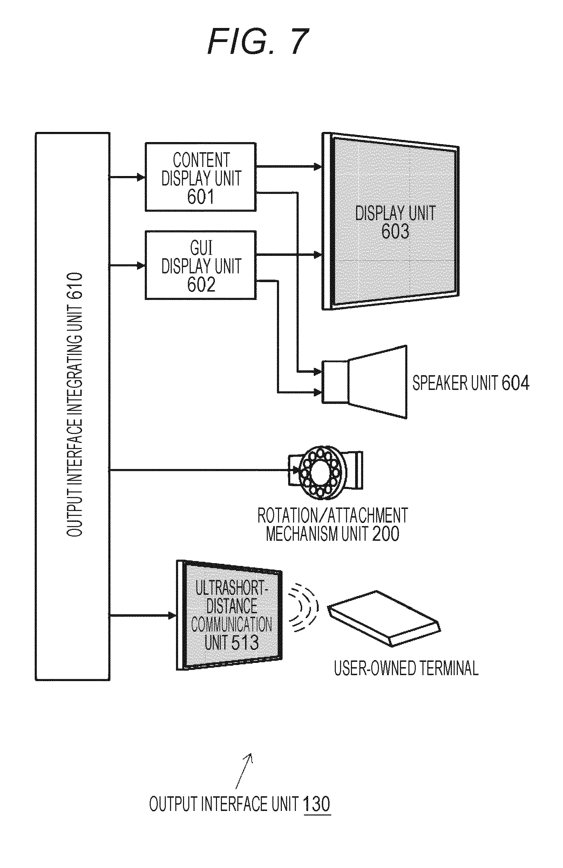

The principal functions of the output interface unit 130 are display of content and a UI on the screen based on a result of an operation performed by the arithmetic operation unit 120, and data transmission to an apparatus owned by a user. Fig. 7 shows the internal structure of the output interface unit 130.

An output interface integrating unit 610 collectively outputs information based on a result of an operation performed by the arithmetic operation unit 120.

The output interface integrating unit 610 instructs a content display unit 601 to output images and sound of distributed content received by the communication unit 150, TV broadcast content received by the television tuner unit 170, and content reproduced from a recording medium such as a Blu-ray Disc, to a moving or still image content display unit 603 and a speaker unit 604.

The output interface integrating unit 610 also instructs a GUI display unit 602 to display a GUI on the display unit 603.

The display unit 603 has a screen formed with a liquid crystal display, for example. The screen size is as large as approximately 50 inches, and the aspect ratio is assumed to be 16 : 9, which is the standard in the market of television products.

The output interface integrating unit 610 also instructs the ultrashort-distance communication unit 513 to transmit data to an apparatus such as a mobile terminal owned by a user through non-contact communication.

B. Parallel Display of Video Content

The information processing apparatus 100 according to this embodiment includes the communication unit 150 that can be connected to a distribution server, the television tuner unit 170, and the video interface unit 180, and is capable of decoding and reproducing pieces of video content such as Internet videos and television broadcast programs.

The display unit 603 is a large screen of approximately 50 inches, for example, and has a sufficient display area to simultaneously display pieces of video content in parallel.

However, if parallel display is performed by a conventional PIP function or a conventional PAP function, there is a problem that part of the information is lost or the use efficiency of the usable display region is low (described above). Where the large screen is put into a portrait-oriented state as shown in Fig. 2, only part of a video in a landscape format is displayed (see Fig. 29), or the video needs to be reduced to the size that matches the width of the portrait-oriented screen (see Fig. 30).

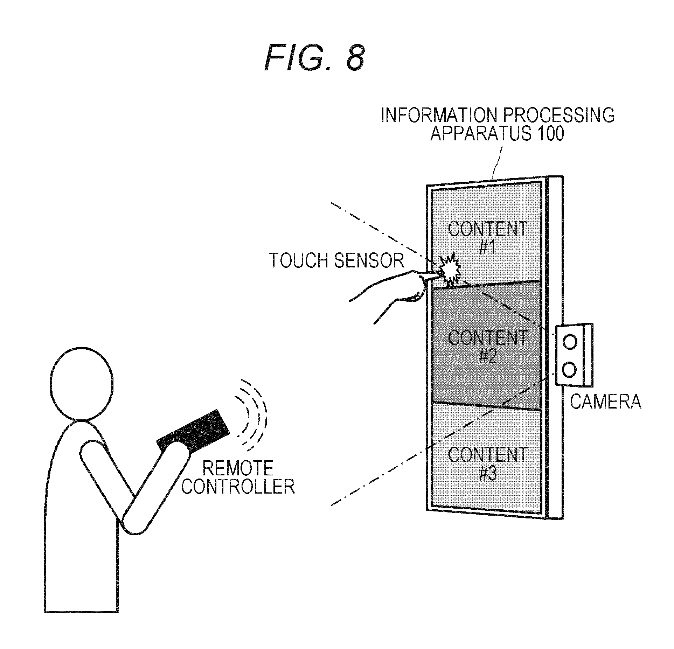

In this embodiment, the aspect ratio of the large screen of the information processing apparatus 100 is assumed to be 16 : 9, which is compatible with a Hi-Vision video. In a case where the large screen is put into a portrait-oriented state and used in a portrait layout, if the large screen is divided into three small screens in the vertical direction, the aspect ratio of the small screens after the dividing is 9 : 16/3 = 16 : 9.48. Accordingly, with respect to the original video content at 16 : 9, the ratio in inches is 9/16 = 56.25% (the area ratio is $(9/16)^2$ = 31.64%). That is, if three 16 : 9 videos that are approximately one third in size are displayed in the vertical direction as shown in Fig. 8, the usable display region is efficiently used. Where three tiers of video content display frames are formed with the use of the portrait layout of the large screen, it can be said that 16 : 9 in the landscape layout is the golden ratio.

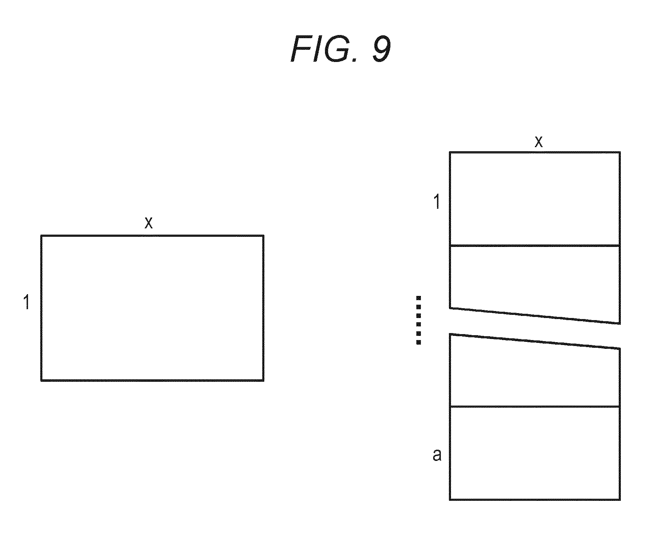

As shown in Fig. 9, in a case where the aspect ratio of a video content to be used in arrangement on the screen is 1 : X, the aspect ratio can be generalized as the golden ratio when the screen is divided into "a" tiers in the vertical direction in the portrait layout. In this case, the following equations (1) hold.

[Mathematical Formula 1]

$$x : 1 = a : x$$
$$x^2 = a$$
$$x = \sqrt{a} \quad \dots (1)$$

In the above equations (1), "a" must be an integer. If "a" = 2, or the portrait layout is divided into two tiers, x = 1.414 ..., or the golden ratio is approximately 7 : 5. If "a" = 3, or the portrait layout is divided into three tiers, x = 1.732 ..., or the golden ratio is 16 : 9 (Hi-Vision) as shown in Fig. 8. If "a" = 4, or the portrait layout is divided into four tiers, x = 2.000 ..., or the golden ratio is 2 : 1. If "a" = 5, or the portrait layout is divided into five tiers, x = 2.236 ..., or the golden ratio is approximately 12 : 5 (CinemaScope).

[Mathematical Formula 2]

$$2 \text{ screens } x = 1.414 \Rightarrow 7 : 5$$

$$3 \text{ screens } x = 1.732 \Rightarrow 16 : 9 \text{ (Hi-Vision)}$$

$$4 \text{ screens } x = 2.000 \Rightarrow 2 : 1$$

$$5 \text{ screens } x = 2.236 \Rightarrow 12 : 5 \text{ (CinemaScope)}$$

Fig. 8 shows a situation where the large screen is put into a portrait-oriented state and is used in the portrait layout, and pieces of video content #1 through #3 with the aspect ratio of 16 : 9 are displayed in parallel on respective small screens arranged in the vertical direction. For example, three kinds of content #1 through #3 such as broadcast content simultaneously received from different broadcasting stations, content reproduced from recording media, or streaming videos from a network can be arranged in the vertical direction and be displayed at the same time.

A content switching instruction or the like on the large screen in the portrait layout displaying pieces (three in the example shown in Fig. 8) of video content are displayed in parallel is basically issued through a touch panel operation, but may be issued through an operation of the arrow keys on a remote controller or through a gesture input.

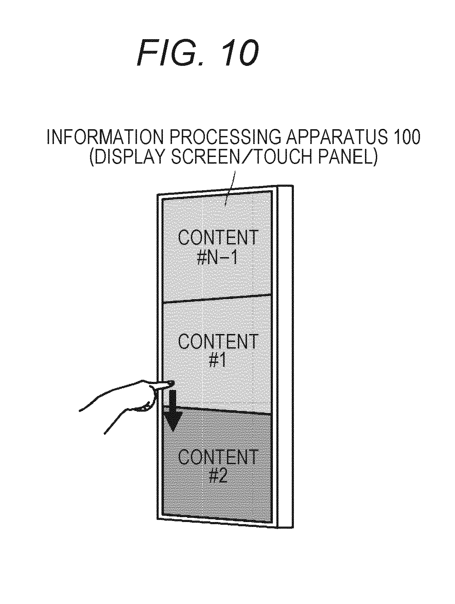

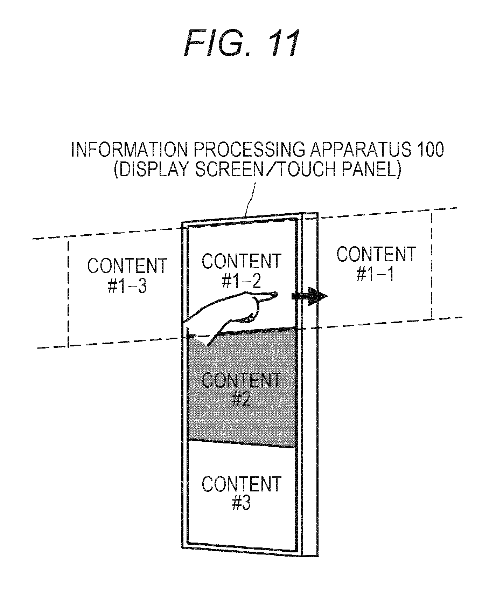

Figs. 10 and 11 show basic user operations on the screen in the portrait layout displaying pieces of video content in parallel.

As shown in Fig. 10, when a dragging or flicking operation is performed in the vertical direction while the tip of a finger remains in contact with the screen, the pieces of video content displayed in parallel move in the vertical direction. This resembles an operation of scrolling the screen up and down on the GUI screen of a computer. The dragging or flicking operation in the vertical direction can be replaced with an operation of the upward and downward buttons on the remote controller (the same applies in the examples described below).

As shown in Fig. 11, when a user performs a dragging or flicking operation in the horizontal direction with a finger in any of the three tiers, the screen in the tier scrolls in the horizontal direction. By a dragging or flicking operation in the horizontal direction, an operation to scroll all the three tiers, instead of one particular tier, may be performed. The dragging or flicking operation in the horizontal direction can be replaced with an operation of the right and left buttons on the remote controller (the same applies in the examples described below).

When the user performs a flicking operation by flicking the screen (or quickly moving the tip of a finger), instead of a dragging operation, the video content displayed on the large screen in the portrait layout scrolls in the vertical direction or the horizontal direction at high speed.

The dragging or flicking operation to be performed by the user in the vertical direction or the horizontal direction on the touch panel can be replaced with an input through the arrow keys on the remote controller or a gesture operation by the user.

As the three-tier video content display frames with the use of the portrait layout of the large screen are used, zapping can be performed collectively on the three screens, or one particular tier can be changed. Also, in accordance with the video content to be displayed on the center screen, information related to the video content can be displayed on the top and bottom screens.

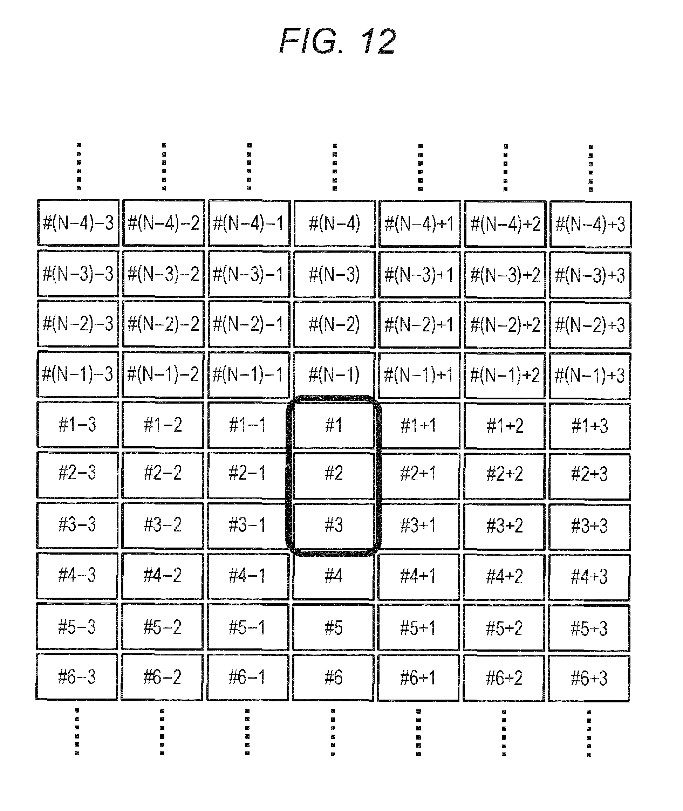

In the information processing apparatus 100, a large number of pieces of content acquired via the communication unit 150, the television tuner unit 170, the video interface unit 180, and the like are arranged in a matrix fashion as shown in Fig. 12, for example, and are managed. For example, pieces of video content that have the same video source or similar video sources, such as television broadcast programs or Internet videos, can be arranged in the vertical direction in the matrix, and pieces of video content that belong to the same category or similar categories, such as videos associated with the same keyword, can be arranged in the horizontal direction.

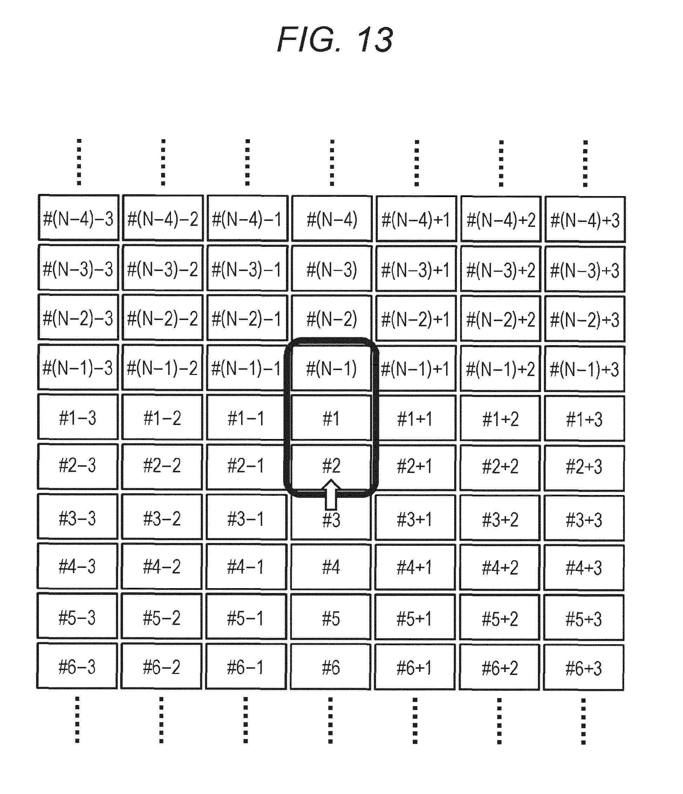

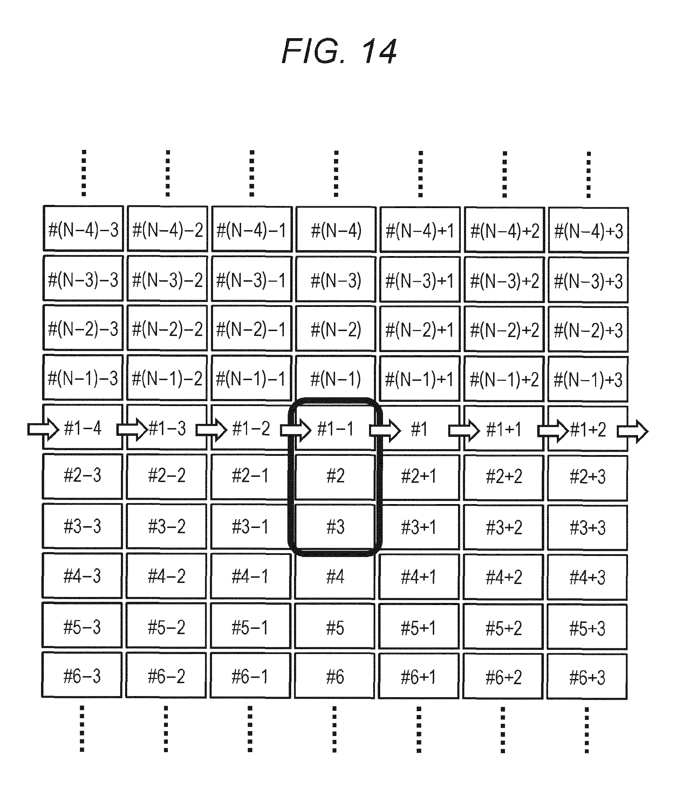

The screen display example shown in Fig. 8 is equivalent to the three pieces of content that are surrounded by a bold line in the matrix and are arranged in a line in the vertical direction as shown in Fig. 12, and are expanded in the portrait layout. The collective zapping of the three screens shown in Fig. 10 is equivalent to moving the three pieces of content surrounded by a bold line one screen upward as shown in Fig. 13. The changing of only one particular tier among the three tiers of video content shown in Fig. 11 is equivalent to moving the entire corresponding row in the matrix as shown in Fig. 14.

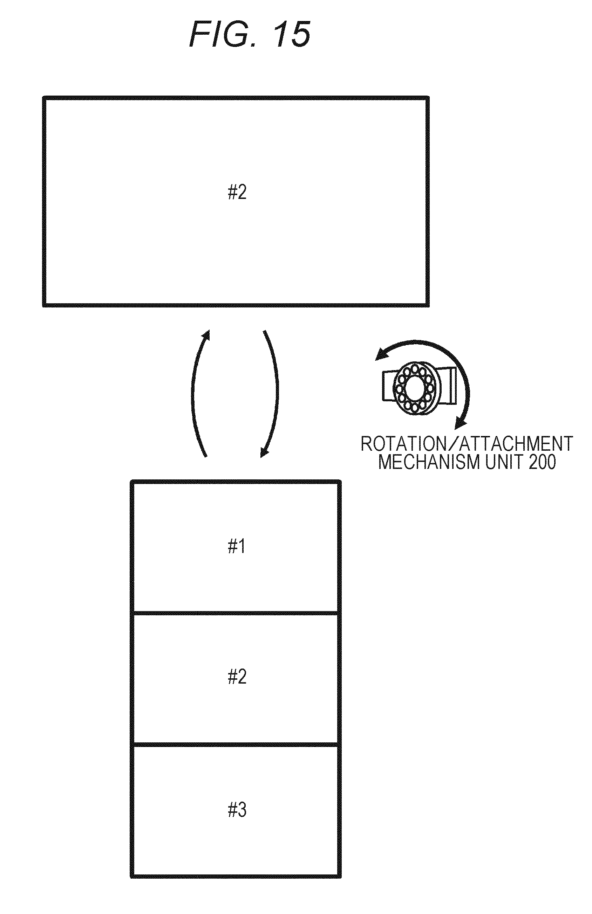

Figs. 15 through 18 show examples of screen transitions in accordance with rotating operations of the large screen and screen operations by a user in the information processing apparatus 100.

As shown in the upper portion of Fig. 15, the main frame of the information processing apparatus 100 is put into a landscape-oriented state that is the initial state where only one piece of video content is displayed in the landscape layout of the large screen.

When the main frame of the information processing apparatus 100 rotates via the rotation/attachment unit 200, and a change to the portrait layout is detected, the screen state transits to a state where three 16 : 9 videos that are approximately one third in size are displayed in the vertical direction with the use of the portrait layout of the large screen, as shown in the lower portion of Fig. 15. When the main frame of the information processing apparatus 100 further rotates, and a change to the landscape layout is detected, the screen state returns to the initial state where only one piece of video content is displayed in the landscape layout of the large screen.

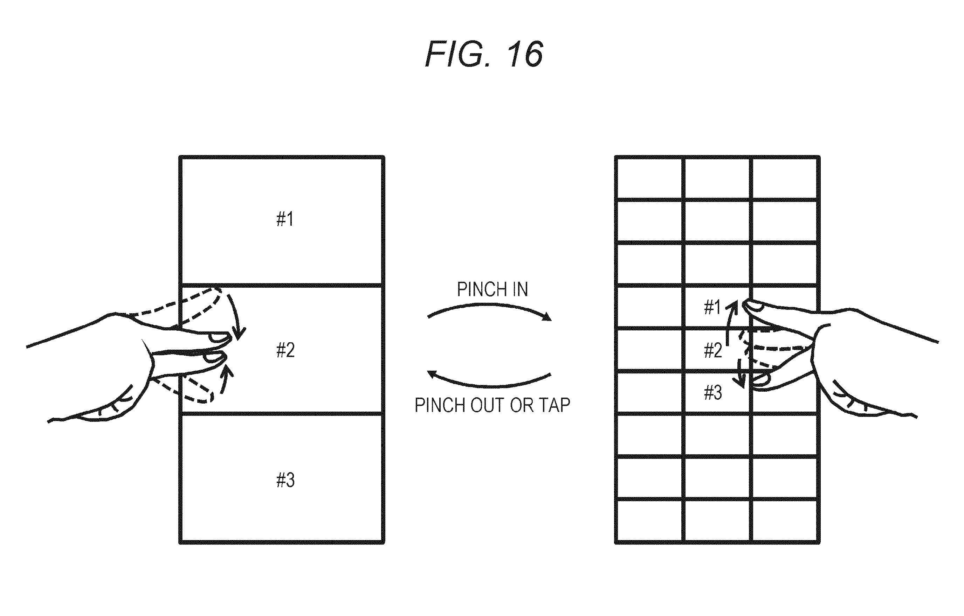

In the state where three 16 : 9 videos that are approximately one third in size are displayed in the vertical direction with the use of the portrait layout of the large screen, when the user performs a pinching-in operation on one of the three tiers of small screens, the small screens become smaller and transit to a screen layout in which the smallest screens are arranged in nine rows and three columns. In Fig. 16, when a pinching-in operation is performed on the center small screen among the three tiers of small screens as shown in the left side of the drawing, the screen layout transits to a screen layout in which the smallest screens are arranged in nine rows and three columns, and the video content #2 displayed in this small screen is located substantially at the center as shown in the right side of the drawing.

Each of the 27 smallest screens arranged in nine rows and three columns in the large screen has lower resolution and holds a smaller amount of information than the original video. However, the user can recognize, from the nine rows and three columns of screens, the video content currently available to him/her (such as television programs being aired by the other broadcasting stations). The user can also understand, from the nine rows and three columns of screens, how to perform a dragging or flicking operation to reach desired video content.

When the user performs a pinching-out operation or a tapping operation on one of the small screens in a state where the smallest screens are arranged in nine rows and three columns as shown in the right side of Fig. 16, the screen state transits to a state where three small screens are arranged, with the operated small screen being located at the center. In the example shown in Fig. 16, a pinching-out operation or a tapping operation is performed on the small screen displaying the video content #2, and the screen state transits to a state where the pieces of video content #1, #2, and #3 are displayed in three tiers in the vertical direction.

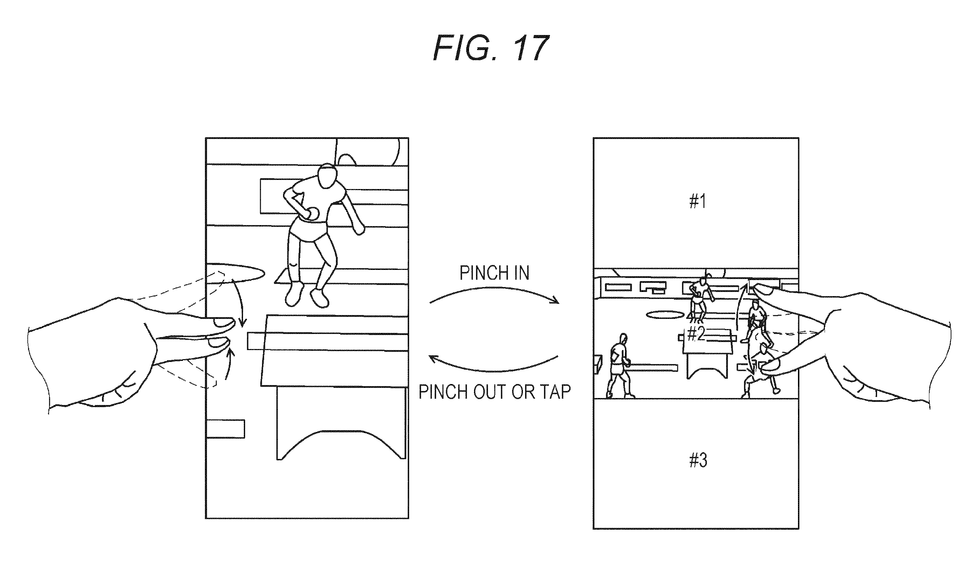

In the state where three 16 : 9 videos that are approximately one third in size are displayed in the vertical direction with the use of the portrait layout of the large screen, when the user performs a pinching-out operation or a tapping operation on one of the three tiers of small screens, the operated small screen becomes larger and is displayed as a full screen. In Fig. 17, when a pinching-out operation or a tapping operation is performed on the center small screen displaying the video content #2 among the three tiers of video content #1, #2, and #3 as shown in the right side of the drawing, the video content #2 becomes larger and is displayed as a full screen as shown in the right side of the drawing. If the resolution of the original video content #2 is not sufficiently high, a super-resolution technology may be introduced when a full screen is displayed.

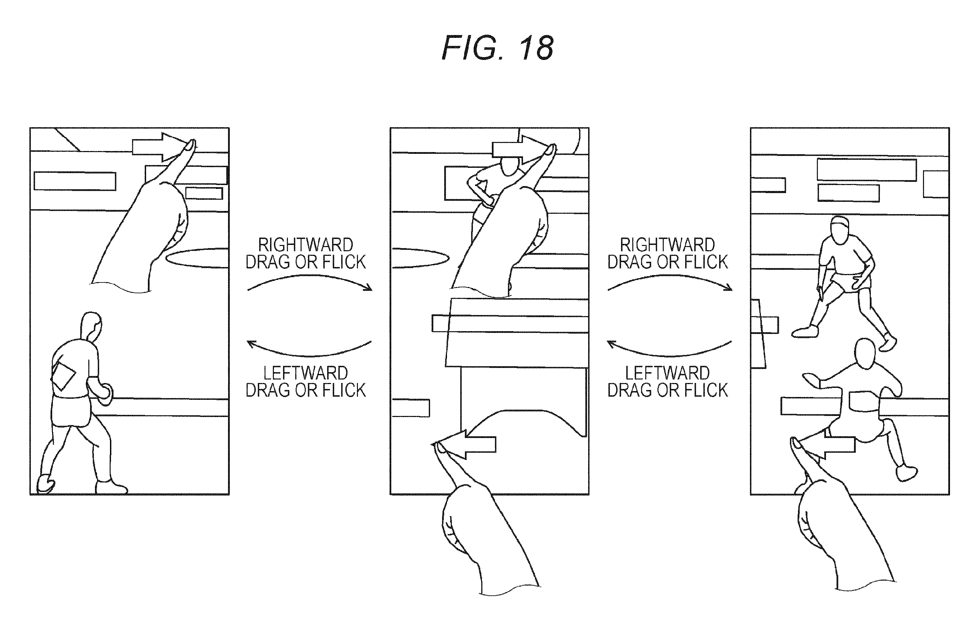

When the 16 : 9 video content #2 is displayed as a full screen while the large screen remains in the portrait layout as shown in the left side of Fig. 17, only one third of the region is displayed in the horizontal direction, and some information is lost. In view of this, the user may perform a rightward dragging or flicking operation on the large screen to move the display region to the right side of the original video content #2, or perform a leftward dragging or flicking operation to move the one-third region to be displayed to the left side of the original video content #2, as shown in Fig. 18. In this manner, the image of a desired person or the like is displayed. When a pinching-in operation is performed on the video content #2 displayed as a full screen as shown in the left side of Fig. 17, the screen state returns to the small screens shown in the right side of Fig. 17.

In the screen structure that displays tiers of video content in a landscape format in the portrait layout as shown in Fig. 8, the amount of information in each piece of video content becomes smaller, but efficient zapping can be performed. Also, where three tiers of video content are arranged in the portrait layout with the use of the golden ratio of 16 : 9 for the screen, the usable display region can be used with high efficiency.

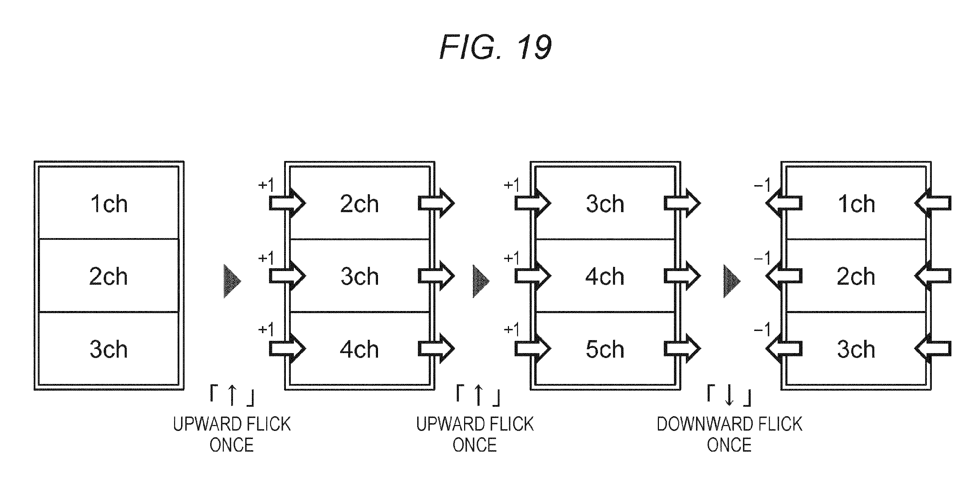

Figs. 19 through 22 show screen transition examples using three-tier display in the portrait layout in selecting television broadcasting channels. In the description below, there are channels 1 through 12 as television broadcasting channels, and the television tuner unit 170 of the information processing apparatus 100 is in an environment to receive approximately 10 channels. Where three tiers of video content are arranged in the portrait layout, all the receivable channels can be efficiently viewed.

Fig. 19 shows a screen transition example in which upward and downward flicking operations (or upward and downward button operations on the remote controller) are performed to switch display of three tiers of small screens. In the example shown in the drawing, the respective television programs on channels 1 through 12 are virtually arranged in ascending order (or descending order, which applies in the examples described below) of channel number from left to right in each tier. It is not possible to randomly combine broadcasting channels.

First, the television programs on channels 1, 2, and 3 are vertically arranged and displayed in the respective tiers in this order from the top. When the user performs an upward flicking operation once (or presses the upward button on the remote controller once) in this state, the small screen in each tier moves rightward by one, the channel number in each tier increases by one, and the screen state transits to a screen state where the television programs on channels 2, 3, and 4 are displayed in parallel in three tiers.

When the user further performs an upward flicking operation once, the small screen in each tier moves rightward by one, the channel number in each tier increases by one, and the screen state transits to a screen state where the television programs on channels 3, 4, and 5 are displayed in parallel in three tiers. When the user performs a downward flicking operation once (or presses the downward button on the remote controller once), the small screen in each tier moves leftward by one, the channel number in each tier decreases by one, and the screen state transits to a screen state where the television programs on channels 2, 3, and 4 are displayed in parallel in three tiers.

According to the screen transition example shown in Fig. 19, the user can constantly view television programs of three broadcasting stations with consecutive channel numbers. Also, video display is switched only by an amount equivalent to one channel in each small screen through one upward/downward flicking operation or one upward/downward button operation, and the screen transition speed is low. Accordingly, the user can view the videos on the respective channels without any omission.

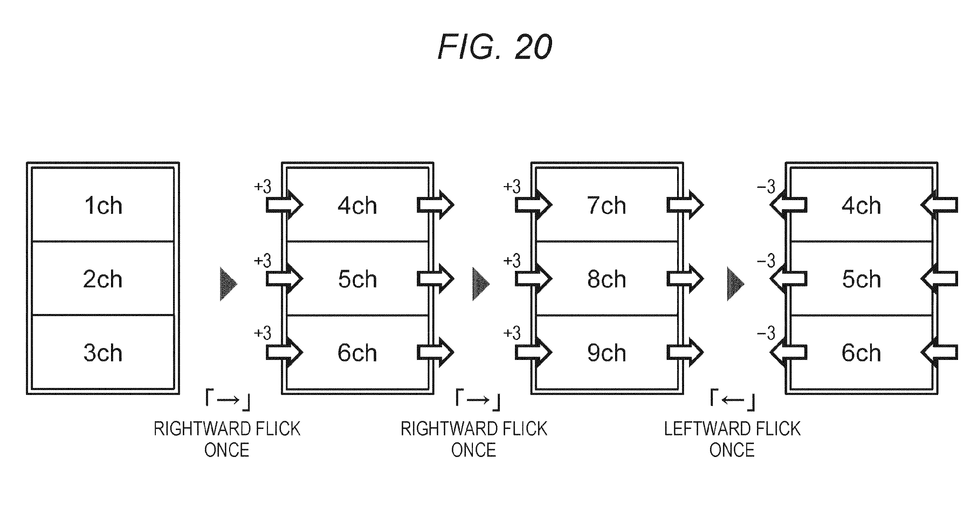

Fig. 20 shows a screen transition example in which rightward and leftward flicking operations (or right and left button operations on the remote controller) are performed to switch display of three tiers of small screens. In the example shown in the drawing, the television program on channel (3N + 1) on the small screen in the top tier, the television program on channel (3N + 2) on the small screen in the center tier, and the television program on channel 3(N + 1) on the small screen in the bottom tier are virtually arranged in ascending order of channel number from left to right (N being an integer of 0 to 3). In the example shown in the drawing, it is not possible to randomly combine broadcasting channels, either.

First, the television programs on channels 1, 2, and 3 are vertically arranged and displayed in this order. When the user performs a rightward flicking operation once (or presses the upward button on the remote controller once) in this state, the small screen in each tier moves rightward by one, the channel number in each tier increases by three, and the screen state transits to a screen state where the television programs on channels 4, 5, and 6 are displayed in parallel in three tiers.

When the user further performs a rightward flicking operation once, the small screen in each tier moves rightward by one, the channel number in each tier increases by three, and the screen state transits to a screen state where the television programs on channels 7, 8, and 9 are displayed in parallel in three tiers. When the user performs a leftward flicking operation once (or presses the left button on the remote controller once), the small screen in each tier moves leftward by one, the channel number in each tier decreases by three, and the screen state transits to a screen state where the television programs on channels 4, 5, and 6 are displayed in parallel in three tiers.

According to the screen transition example shown in Fig. 20, the user can constantly view television programs of three broadcasting stations with consecutive channel numbers. Also, video display is switched by an amount equivalent to three channels through one rightward/leftward flicking operation or one right/left button operation. Accordingly, the user can view the television programs through efficient zapping.

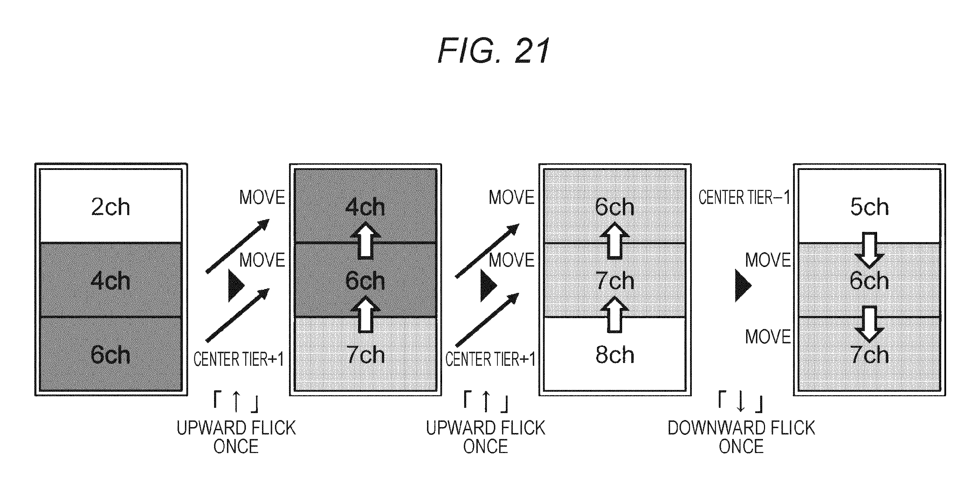

Fig. 21 shows a screen transition example in which upward and downward flicking operations (or upward and downward button operations on the remote controller) are performed to switch display of three tiers of small screens. In the example shown in the drawing, the respective television programs on channels 1 through 12 are virtually arranged in ascending order of channel number from top to bottom. Unlike the example shown in Fig. 19, this example allows a combination of desired broadcasting channels.

First, in accordance with a channel switching operation or the like performed by the user, television programs on channels 2, 4, and 6 are displayed on the respective small screens in this order from top. When the user performs an upward flicking operation once (or presses the upward button on the remote controller once) in this state, a screen transition is caused to move each of the videos on the small screens upward by one tier. Specifically, the television program on channel 2 on the small screen in the top tier disappears, and each of the television programs on channels 4 and 6 displayed on the small screens in the center and bottom tiers is moved up by one tier. The emptied bottom tier is filled with the television program on channel 7, which is one greater than the channel number of the television program previously displayed therein.

When an upward flicking operation is further performed, a screen transition is caused to move each of the videos on the small screens upward by one tier. Specifically, the television program on channel 4 on the small screen in the top tier disappears, and each of the television programs on channels 6 and 7 displayed on the small screens in the center and bottom tiers is moved up by one tier. The emptied bottom tier is filled with the television program on channel 8, which is one greater than the channel number of the television program previously displayed therein.

When a downward flicking operation is performed once (or the downward button on the remote controller is pressed once), a screen transition is caused to move each of the small screens downward by one tier this time. Specifically, the television program on channel 8 on the small screen in the bottom tier disappears, and each of the television programs on channels 6 and 7 displayed on the small screens in the top and center tiers is moved down by one tier. The emptied top tier is filled with the television program on channel 5, which is one smaller than the channel number of the television program previously displayed therein.

According to the screen transition example shown in Fig. 21, the user can constantly view television programs of three broadcasting stations with consecutive channel numbers. Through one upward/downward flicking operation or one upward/downward button operation, channel numbers are sequentially changed by one. As the screen transition speed is low, the user can view videos of the respective broadcasting stations without omission. Furthermore, unlike the example shown in Fig. 19, this example allows a combination of desired broadcasting channels.

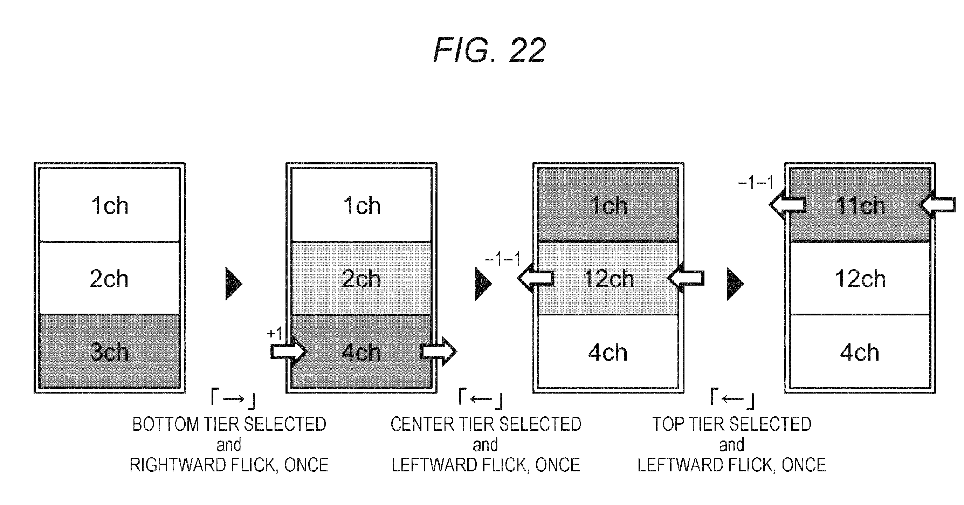

Fig. 22 shows an example in which the small screens of the respective tiers are moved through rightward and leftward flicking operations (right and left button operations on the remote controller). The respective television programs on channels 1 through 12 are virtually arranged in ascending order of channel number from left to right in each tier. The example shown in the drawing also allows a combination of desired broadcasting channels.

First, in accordance with a channel switching operation or the like performed by the user, television programs on channels 1, 2, and 3 are displayed on the respective small screens in this order from top. After the user selects the small screen in the bottom tier through a tapping operation or the like, the user further performs a rightward flicking operation on this small screen once (or presses the right button on the remote controller once). As a result, only the channel number on the small screen in the bottom tier increases by one, and the small screen in the bottom tier transits to a screen that displays the television program on channel 4. To the user, only the small screen in the bottom tier appears as if moving rightward by one channel.

After the small screen in the center tier is selected through a tapping operation or the like, a leftward flicking operation is further performed on this small screen once (or the left button on the remote controller is pressed once). As a result, only the small screen in the center tier changes. If the channel number is reduced only by one, which is equivalent to the number of times a flicking operation is performed, the display on the small screen in the center tier switches to the television program on channel 1, which is the same video as the video being currently displayed on the small screen in the top tier (or a problem that is caused in a case where channel switching operations are performed on the respective tiers independently of one another is caused). Therefore, if the same channel as the channel being currently displayed in another tier is displayed, the channel number is further reduced by one, and the display is switched to the television program on channel 12. To the user, only the small screen in the center tier appears as if moving leftward.

After the small screen in the top tier is selected through a tapping operation or the like, a leftward flicking operation is further performed on this small screen once. As a result, only the small screen in the top tier changes. If the channel number is reduced only by one, which is equivalent to the number of times a flicking operation is performed, the display on the small screen in the top tier switches to the television program on channel 12, which is the same video as the video being currently displayed on the small screen in the center tier. Therefore, if the same channel as the channel being currently displayed in another tier is displayed, the channel number is further reduced by one, and the display is switched to the television program on channel 11. To the user, only the small screen in the top tier appears as if moving leftward.

According to the screen transition example shown in Fig. 22, the user performs channel switching operations on the respective small screens arranged in three tiers independently of one another, and can constantly view a desired combination of television programs of three broadcasting stations. Also, even when channel switching operations are performed on the respective small screens independently of one another, the channel numbers at the transition destinations are automatically controlled so that a television program of the same broadcasting station is not displayed on two or more screens at the same time. Accordingly, the user can perform efficient zapping.

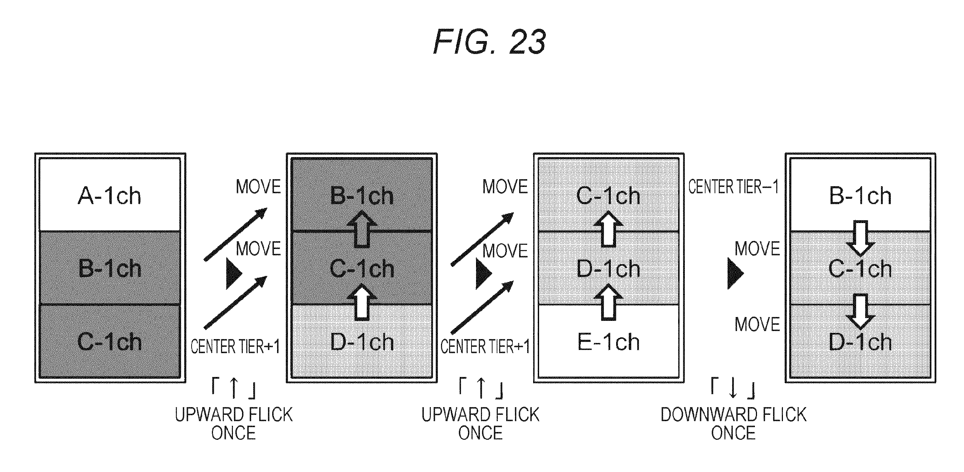

Figs. 23 through 25 show screen transition examples in which the three-tier display in the portrait layout is used in VOD (Video On Demand) distribution services. It should be noted that, in the description below, the content to be VOD-distributed is classified into categories A through Z, and 20 to 30 channels are set in each category in the VOD reception environment. For example, category A is news, category B is weather, and category C is drama.

In a case where the three-tier display in the portrait layout is used in a VOD distribution service, categories being displayed on the small screens are basically switched through upward and downward flicking operations (or upward and downward button operations on the remote controller), and channels being displayed on the small screens are basically switched through rightward and leftward flicking operations (or right and left button operations on the remote controller). Where three tiers of video content are arranged in the portrait layout, all the receivable channels can be efficiently viewed.

Fig. 23 shows a screen transition example in which upward and downward flicking operations (or upward and downward button operations on the remote controller) are performed to switch display of three tiers of small screens. In the example shown in the drawing, categories A through Z are arranged from top to bottom, and pieces of content in each category are virtually arranged in ascending order of channel number from left to right.

First, in accordance with a channel switching operation or the like performed by the user, television programs on channels A-1, B-1, and C-1 are displayed on the respective small screens in this order from top. When the user performs an upward flicking operation once (or presses the upward button on the remote controller once) in this state, a screen transition is caused to move each of the videos on the small screens upward by one tier. Specifically, the television program on channel A-1 on the small screen in the top tier disappears, and each of the television programs on channels B-1 and C-1 displayed on the small screens in the center and bottom tiers is moved up by one tier. The emptied bottom tier is filled with the distributed content on channel D-1, which is one category higher than the video content previously displayed therein and has the same channel number.

When the user further performs an upward flicking operation once, the television program on channel A-1 on the small screen in the top tier disappears, and each of the television programs on channels C-1 and D-1 displayed on the small screens in the center and bottom tiers is moved up by one tier in the same manner as above. The emptied bottom tier is filled with the distributed content on channel E-1, which is one category higher than the video content previously displayed therein and has the same channel number.

When a downward flicking operation is performed once (or the downward button on the remote controller is pressed once), a screen transition is caused to move each of the small screens downward by one tier this time. Specifically, the television program on channel E-1 on the small screen in the bottom tier disappears, and each of the television programs on channels C-1 and D-1 displayed on the small screens in the top and center tiers is moved down by one tier. The emptied top tier is filled with the distributed content on channel B-1, which is one category higher than the video content previously displayed therein and has the same channel number.

According to the screen transition example shown in Fig. 23, when the user performs an upward/downward flicking operation or operates the upward or downward button once, the categories of the content being displayed on the small screens in the three tiers are sequentially switched by one. Also, categories are switched only by an amount equivalent to one category through one upward/downward flicking operation or one upward/downward button operation, and the screen transition speed is low. Accordingly, the user can view the videos in the respective categories without any omission. It is not possible to randomly combine categories.

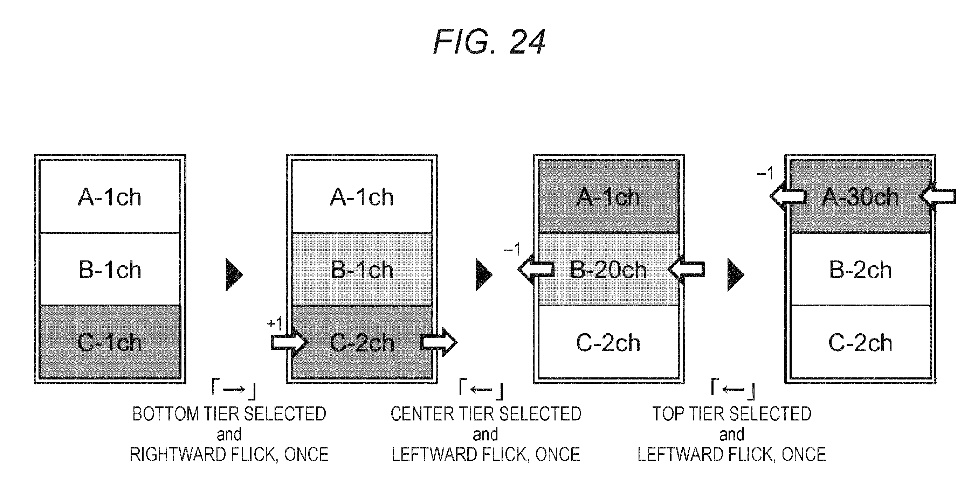

Fig. 24 shows an example in which the small screens of the respective tiers are moved through rightward and leftward flicking operations (right and left button operations on the remote controller). In the example shown in the drawing, categories A through Z are arranged from top to bottom, and pieces of content in each category are virtually arranged in ascending order of channel number from left to right. In the example shown in the drawing, it is not possible to randomly combine categories, either.

First, in accordance with a channel switching operation or the like performed by the user, pieces of VOD content on channels A-1, B-1, and C-1 are displayed on the respective small screens in this order from top. After the user selects the small screen in the bottom tier through a tapping operation or the like, the user further performs a rightward flicking operation on this small screen once (or presses the right button on the remote controller once). As a result, only the channel number on the small screen in the bottom tier increases by one, and the small screen in the bottom tier transits to a screen that displays the VOD content on channel C-2. To the user, only the small screen in the bottom tier appears as if moving rightward by one channel.

After the small screen in the center tier is selected through a tapping operation or the like, a leftward flicking operation is further performed on this small screen once (or the left button on the remote controller is pressed once). As a result, only the channel number on the small screen in the center tier decreases by one. Since the first channel number is "1", when the channel number decreases by one, the small screen in the center tier transits to a screen that displays the VOD content on channel B-20, which has the last channel number. To the user, only the small screen in the center tier appears as if moving rightward by one channel. As different categories are displayed in the respective tiers, any problem that is caused in a case where channel switching operations are performed on the respective tiers independently of one another is not caused.

After the small screen in the top tier is selected through a tapping operation or the like, a leftward flicking operation is further performed on this small screen once. As a result, only the small screen in the top tier changes. Since the first channel number is "1", when the channel number decreases by one, the small screen in the center tier transits to a screen that displays the VOD content on channel A-30, which has the last channel number. To the user, only the small screen in the top tier appears as if moving leftward.

According to the screen transition example shown in Fig. 24, when the user performs a rightward/leftward flicking operation or operates the right or left button once, channel numbers can be switched in the category being displayed on the small screen in one of the tiers. Also, channel numbers are sequentially switched by one through one rightward/leftward flicking operation or one rightward/leftward button operation, and the screen transition speed is low. Accordingly, the user can view the videos in the respective categories without any omission. As in the example shown in Fig. 23, it is not possible to randomly combine categories, either.

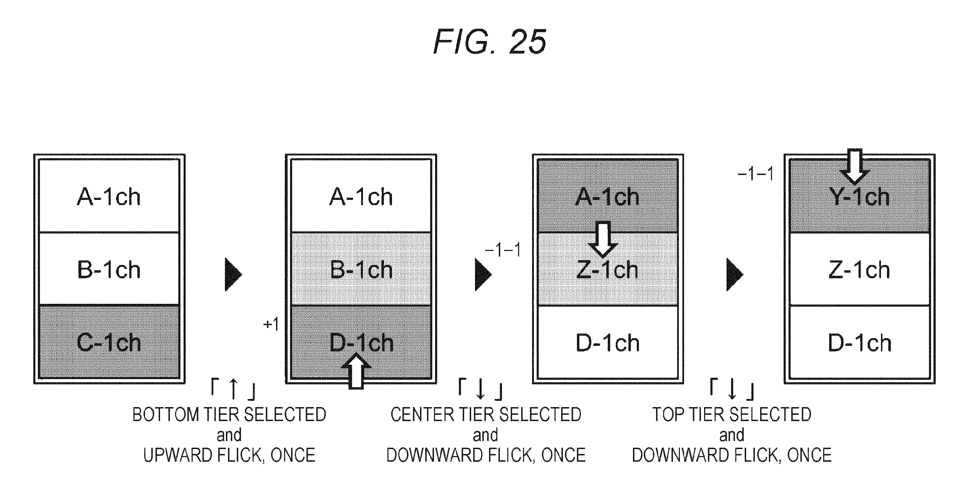

Fig. 25 shows an example in which the small screens of the respective tiers are moved through upward and downward flicking operations (upward and downward button operations on the remote controller). In the example shown in the drawing, categories A through Z are arranged from top to bottom, and pieces of content in each category are virtually arranged in ascending order of channel number from left to right. The example shown in the drawing allows a combination of desired categories.

First, in accordance with a channel switching operation or the like performed by the user, pieces of VOD content on channels A-1, B-1, and C-1 are displayed on the respective small screens in this order from top. After the user selects the small screen in the bottom tier through a tapping operation or the like, the user further performs an upward flicking operation on this small screen once (or presses the upward button on the remote controller once). As a result, only the category being displayed on the small screen in the bottom tier changes while the channel number remains the same, and the small screen in the bottom tier transits to a screen that displays the VOD content on channel D-1. To the user, only the small screen in the bottom tier appears as if moving rightward by one channel.

After the small screen in the center tier is selected through a tapping operation or the like, a downward flicking operation is further performed on this small screen once (or the downward button on the remote controller is pressed once). As a result, only the category of the content being displayed on the small screen in the center tier changes. If the category is made lower only by one, which is equivalent to the number of times a flicking operation is performed, the category becomes the same as the category of the content being currently displayed on the small screen in the top tier (or a problem that is caused in a case where category switching operations are performed on the respective tiers independently of one another is caused). Therefore, in a case where the category is the same as the category in another tier, the category is made lower by another one while the channel number is maintained. Since category A being displayed in the top tier is the first category, when the category is made lower by another one, the content being displayed is switched to the VOD content on channel Z-1, which is in the last category Z and has the same channel. To the user, only the small screen in the center tier appears as if moving rightward by one channel.

After the small screen in the top tier is selected through a tapping operation or the like, a downward flicking operation is further performed on this small screen once. As a result, only the small screen in the top tier changes. If the category is made lower only by one, which is equivalent to the number of times a flicking operation is performed, the category becomes the same as category Z being currently displayed on the small screen in the center tier. Therefore, in a case where the category is the same as the category in another tier, the category is made lower by another one while the channel number is maintained. That is, the content being displayed is switched to the VOD content on channel Y-1 in category Y, which is one category lower than category Z as the last category, while the channel remains the same. To the user, only the small screen in the top tier appears as if moving leftward.

According to the screen transition example shown in Fig. 25, when the user performs an upward/downward flicking operation or operates the upward or downward button once, the category being displayed on the small screen in one of the tiers can be switched. Also, categories are sequentially switched through one upward/downward flicking operation or one upward/downward button operation, and the screen transition speed is low. Accordingly, the user can view the videos in the respective categories without any omission. Also, even when category switching operations are performed on the respective small screens independently of one another, the categories at the transition destinations are automatically controlled so that the same category is not displayed on two or more screens at the same time. Accordingly, the user can perform efficient zapping. Furthermore, unlike the example shown in Fig. 23, this example allows a combination of desired categories.

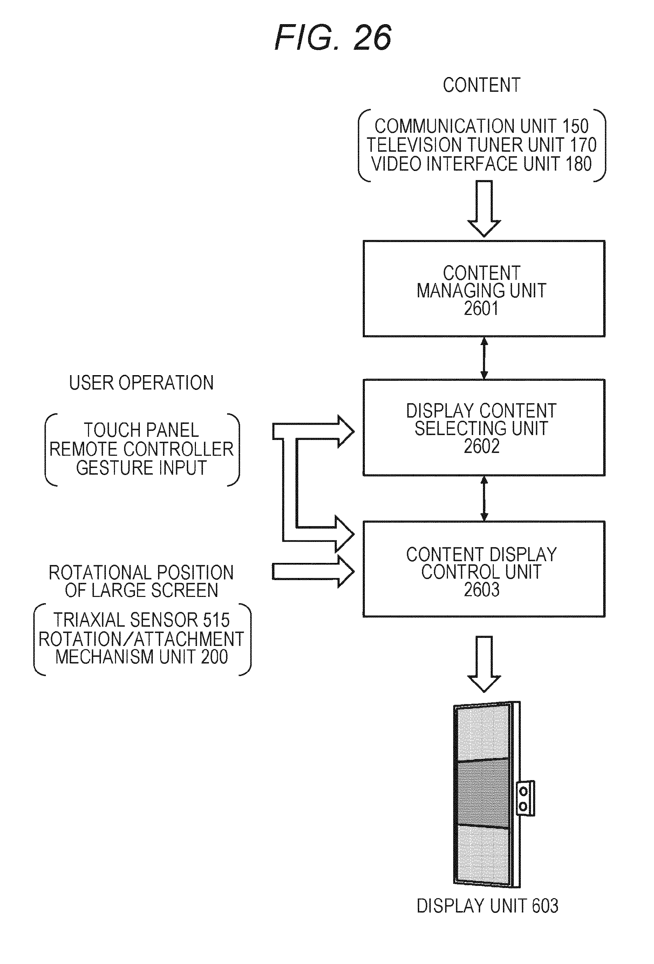

Fig. 26 schematically shows a functional structure for controlling display of content in accordance with the rotational position of the large screen in the information processing apparatus 100. The functional structure shown in the drawing can be realized by the arithmetic operation unit 120 executing a predetermined program, for example.

A content managing unit 2601 manages video content that is input to the information processing apparatus 100, such as distributed content including VOD and the like acquired via the communication unit 150, television broadcast content of respective broadcasting stations received by the television tuner unit 170, and content that is reproduced from Blu-ray Discs and is acquired via the video interface unit 180. The content managing unit 2601 arranges and manages the acquired pieces of video content in a matrix fashion as shown in Fig. 12, in accordance with categories, the channel numbers of the input sources, and the like.

A display content selecting unit 2602 selects the content to be displayed from among the pieces of video content arranged in the matrix fashion, in accordance with a touch operation, a remote control operation, a gesture input, or the like performed by a user on the large screen. When a vertical movement instruction is issued from the user, the display content selecting unit 2602 basically searches the content in the matrix in the vertical direction. When a horizontal movement instruction is issued from the user, the display content selecting unit 2602 basically searches the content in the matrix in the horizontal direction. The display content selecting unit 2602 preferably selects content so that the same content is not displayed on the small screens in the three tiers in the vertical direction.

A content display control unit 2603 controls display of content on the display unit 603 in accordance with the usage state of the information processing apparatus 100. Specifically, the usage state of the information processing apparatus 100 herein is the rotational position of the large screen. The rotational position of the large screen can be acquired from the triaxial sensor 515 or the rotation/attachment mechanism unit 200, for example. In accordance with the rotational position of the large screen, the content display control unit 2603 displays video content in either the landscape layout or the portrait layout.

The aspect ratio of the large screen of the information processing apparatus 100 is assumed to be 16 : 9, which is compatible with a Hi-Vision video. As described above, in a case where the large screen is divided into three small screens in the vertical direction, and three 16 : 9 videos that are approximately one third in size are displayed in the vertical direction, the usable display region is efficiently used.

Therefore, when detecting that the large screen is set in the portrait layout, the content display control unit 2603 in this embodiment divides the large screen into three small screens in the vertical direction, and requests three pieces of content to be displayed on the respective small screens from the display content selecting unit 2602.

Upon receipt of the request from the content display control unit 2603 for the pieces of content to be displayed in three tiers on the large screen in the portrait layout, the display content selecting unit 2602 searches the matrix shown in Fig. 12, selects the three pieces of content to be displayed in the three tiers, and supplies the selected pieces of content to the content display control unit 2603. In doing so, the display content selecting unit 2602 selects the three pieces of content so that there is no overlapping of categories or channel numbers. When a pinching-out operation is performed on a screen displaying video content in three tiers in the portrait layout, the content display control unit 2603 requests 27 pieces of video content to be displayed in nine rows and three columns from the display content selecting unit 2602.

As described above, according to this embodiment, in a case where the large screen having an aspect ratio of 16 : 9 is put into the portrait layout, the large screen is divided into three small screens in the vertical direction, and different videos are allotted to the respective small screens as shown in Fig. 15. In this manner, different videos can be displayed in parallel, without any missing information and a decrease in efficiency in the usable display region.

Furthermore, according to this embodiment, respective videos displayed in parallel on screens can be switched through an efficient user operation, as shown in Figs. 19 through 25, for example.

The technology disclosed in this specification may also be embodied in the structures described below.

(1) A display apparatus including:

a display unit that has a screen with a predetermined aspect ratio;
a content managing unit that manages pieces of content that can be displayed on the screen;
a content display control unit that controls display of content in accordance with a state of the screen; and
a display content selecting unit that selects content to be displayed on the screen from among the pieces of content being managed by the content managing unit, in accordance with an instruction from the content display control unit.

(2) The display apparatus of (1), wherein the content display control unit controls the number of pieces of content to be displayed in parallel on the screen, in accordance with a rotational position of the screen.

(3) The display apparatus of (1), wherein
the screen has an aspect ratio of x : 1, which substantially holds x : 1 = a : x ("a" being an integer of 2 or greater), and,
in response to setting of the screen in a portrait layout, the content display control unit divides the screen into "a" small screens in a vertical direction and displays pieces of content in parallel on the respective small screens.

(4) The display apparatus of (1), wherein
the screen has an aspect ratio of 16 : 9, and,
in response to setting of the screen in a portrait layout, the content display unit divides the screen into three small screens in a vertical direction and displays pieces of content in parallel on the respective small screens.

(5) The display apparatus of (3), wherein the display content selecting unit switches the pieces of content being displayed on the small screens in response to a user operation performed on the screen.

(6) The display apparatus of (3), wherein, in response to a pinching-in operation performed by a user on one of the small screens, the content display control unit reduces the small screens in size, and causes the small screens to transit to a screen layout in which smallest screens are arranged in "$a^2$" rows and "a" columns.

(7) The display apparatus of (6), wherein, in response to a pinching-out or tapping operation performed by a user on one of the smallest screens, the content display control unit causes the smallest screens to transit to a screen layout in which "a" small screens are arranged in the vertical direction.

(8) The display apparatus of (3), wherein, in response to a pinching-out or tapping operation performed by a user on one of the small screens, the content display control unit enlarges the one of the small screens, so that display of a region of one "a"th in size in a horizontal direction transits to full-screen display on the screen in the portrait layout.

(9) The display apparatus of (8), wherein, in response to a pinching-in operation performed by a user on the screen displaying the enlarged one of the small screens, the content display control unit causes the screen to transit to a screen layout in which "a" small screens are arranged in the vertical direction.

(10) The display apparatus of (8), wherein, in response to a dragging or flicking operation performed by a user on the screen showing the full-screen display, the content display control unit moves the 1/a region being displayed on the screen in a direction of the dragging or flicking operation.

(11) The display apparatus of (3), further including a content receiving unit that receives pieces of content that are broadcast on television,
wherein the content managing unit manages the received pieces of content based on channel numbers, and,
in accordance with ascending order or descending order of channel number, the display content selecting unit selects respective pieces of content to be displayed on the "a" small screens arranged in the vertical direction.

(12) The display apparatus of (11), wherein, in response to a vertical flicking operation performed by a user on the screen, the display content selecting unit sequentially increments or decrements the respective channel numbers of the pieces of content being displayed on the "a" small screens.

(13) The display apparatus of (11), wherein, in response to a horizontal flicking operation performed by a user on the screen, the display content selecting unit increments or decrements, by "a", the respective channel numbers of the pieces of content being displayed on the "a" small screens.

(14) The display apparatus of (11), wherein, in response to a horizontal flicking operation that is performed after a user selects a specific small screen, the display content selecting unit increments or decrements the channel number of the piece of content being displayed on the specific small screen, in accordance with the number of times the flicking operation is performed.

(15) The display apparatus of (14), wherein the display content selecting unit selects content so that pieces of content being displayed on two or more small screens do not have the same channel number.

(16) The display apparatus of (3), further including a content receiving unit that receives pieces of content that are VOD-distributed,
wherein the content managing unit manages the pieces of content based on channel numbers in respective categories, and
the display content selecting unit selects respective categories and channel numbers of the pieces of content to be displayed on the "a" small screens arranged in the vertical direction.

(17) The display apparatus of (16), wherein, in response to a vertical flicking operation performed by a user on the screen, the display content selecting unit sequentially switches categories of the pieces of content being displayed on the "a" small screens.

(18) The display apparatus of (16), wherein, in response to a horizontal flicking operation that is performed after a user selects a specific small screen, the display content selecting unit increments or decrements the channel number of the piece of content being displayed on the specific small screen in accordance with the number of times the flicking operation is performed, while the category of the content being displayed on the specific small screen remains the same.

(19) A display method including:

a content management step of managing pieces of content that can be displayed on a screen having a predetermined aspect ratio;
a content display control step of controlling display of content in accordance with a state of the screen; and
a display content selection step of selecting content to be displayed on the screen from among the pieces of content being managed in the content managing step, in accordance with an instruction issued in the content display control step.

(20) A computer program written in a computer-readable format,
the computer program causing a computer to function as:

a content managing unit that manages pieces of content that can be displayed on a screen having a predetermined aspect ratio;
a content display control unit that controls display of content in accordance with a state of the screen; and
a display content selecting unit that selects content to be displayed on the screen from among the pieces of content being managed by the content managing unit, in accordance with an instruction from the content display control unit.

INDUSTRIAL APPLICABILITY

The technology disclosed in this specification has been described in detail, with reference to specific embodiments. However, it is obvious that those skilled in the art can make modifications to and substitutions of the embodiments without departing from the scope of the technology disclosed in this specification.

Although an embodiment of a TV receiver having a large screen has been mainly described as the information processing apparatus 100 to which the technology disclosed in this specification is applied, the scope of the technology disclosed in this specification is not limited to the above. The technology disclosed in this specification can also be applied to various kinds of information processing apparatuses other than TV receivers, such as multifunctional terminals including personal computers, tablets, and smartphones.

In short, the technology disclosed in this specification has been described through examples, and the descriptions in this specification should not be interpreted in a restrictive manner. The claims should be taken into account in understanding the subject matter of the technology disclosed in this specification.

REFERENCE SIGNS LIST

| 100  | Information processing apparatus |
|------|----------------------------------|
| 110  | Input interface unit |
| 120  | Arithmetic operation unit |
| 130  | Output interface unit |
| 140  | Storage unit |
| 150  | Communication unit |
| 160  | Power supply unit |
| 170  | Television tuner unit |
| 180  | Video interface unit |
| 190  | Bus |
| 200  | Rotation/attachment mechanism unit |
| 501  | Remote control receiving unit |
| 502  | Signal analyzing unit |
| 503  | Camera unit |
| 504  | Image recognizing unit |
| 505  | Microphone unit |
| 506  | Sound recognizing unit |
| 507  | Distance sensor |
| 508  | Signal analyzing unit |
| 509  | Touch detecting unit |
| 510  | Signal analyzing unit |
| 511  | Proximity sensor |
| 512  | Signal analyzing unit |
| 513  | Ultrashort-distance communication unit |
| 514  | Signal analyzing unit |
| 515  | Triaxial sensor unit |
| 516  | GPS receiving unit |
| 517  | Signal analyzing unit |
| 520  | Input interface integrating unit |
| 601  | Content display unit |
| 602  | GUI display unit |
| 603  | Display unit |
| 604  | Speaker unit |
| 2601 | Content managing unit |
| 2602 | Display content selecting unit |
| 2603 | Content display control unit |

**Claims**

1.  A display apparatus comprising:

    a display unit having a screen with a predetermined aspect ratio;
    a content managing unit configured to manage pieces of content that can be displayed on the screen;
    a content display control unit configured to control display of content in accordance with a state of the screen; and

    a display content selecting unit configured to select content to be displayed on the screen from among the pieces of content being managed by the content managing unit, in accordance with an instruction from the content display control unit.

2.  The display apparatus according to claim 1, wherein the content display control unit controls the number of pieces of content to be displayed in parallel on the screen, in accordance with a rotational position of the screen.

3.  The display apparatus according to claim 1, wherein the screen has an aspect ratio of x : 1, which substantially holds x : 1 = a : x ("a" being an integer of 2 or greater), and,
    in response to setting of the screen in a portrait layout, the content display control unit divides the screen into "a" small screens in a vertical direction and displays pieces of content in parallel on the respective small screens.

4.  The display apparatus according to claim 1, wherein the screen has an aspect ratio of 16 : 9, and,
    in response to setting of the screen in a portrait layout, the content display unit divides the screen into three small screens in a vertical direction and displays pieces of content in parallel on the respective small screens.

5.  The display apparatus according to claim 3, wherein the display content selecting unit switches the pieces of content being displayed on the small screens in response to a user operation performed on the screen.

6.  The display apparatus according to claim 3, wherein, in response to a pinching-in operation performed by a user on one of the small screens, the content display control unit reduces the small screens in size, and causes the small screens to transit to a screen layout in which smallest screens are arranged in "$a^2$" rows and "a" columns.

7.  The display apparatus according to claim 6, wherein, in response to a pinching-out or tapping operation performed by a user on one of the smallest screens, the content display control unit causes the smallest screens to transit to a screen layout in which "a" small screens are arranged in the vertical direction.

8.  The display apparatus according to claim 3, wherein, in response to a pinching-out or tapping operation performed by a user on one of the small screens, the content display control unit enlarges the one of the small screens, so that display of a region of one "a"th in size in a horizontal direction transits to full-screen display on the screen in the portrait layout.

9. The display apparatus according to claim 8, wherein, in response to a pinching-in operation performed by a user on the screen displaying the enlarged one of the small screens, the content display control unit causes the screen to transit to a screen layout in which "a" small screens are arranged in the vertical direction.

10. The display apparatus according to claim 8, wherein, in response to a dragging or flicking operation performed by a user on the screen showing the full-screen display, the content display control unit moves the 1/a region being displayed on the screen in a direction of the dragging or flicking operation.

11. The display apparatus according to claim 3, further comprising
a content receiving unit configured to receive pieces of content that are broadcast on television,
wherein the content managing unit manages the received pieces of content based on channel numbers, and,
in accordance with ascending order or descending order of channel number, the display content selecting unit selects respective pieces of content to be displayed on the "a" small screens arranged in the vertical direction.

12. The display apparatus according to claim 11, wherein, in response to a vertical flicking operation performed by a user on the screen, the display content selecting unit sequentially increments or decrements the respective channel numbers of the pieces of content being displayed on the "a" small screens.

13. The display apparatus according to claim 11, wherein, in response to a horizontal flicking operation performed by a user on the screen, the display content selecting unit increments or decrements, by "a", the respective channel numbers of the pieces of content being displayed on the "a" small screens.

14. The display apparatus according to claim 11, wherein, in response to a horizontal flicking operation that is performed after a user selects a specific small screen, the display content selecting unit increments or decrements the channel number of the piece of content being displayed on the specific small screen, in accordance with the number of times the flicking operation is performed.

15. The display apparatus according to claim 14, wherein the display content selecting unit selects content so that pieces of content being displayed on two or more small screens do not have the same channel number.

16. The display apparatus according to claim 3, further comprising
a content receiving unit configured to receive pieces of content that are VOD-distributed,
wherein the content managing unit manages the pieces of content based on channel numbers in respective categories, and
the display content selecting unit selects respective categories and channel numbers of the pieces of content to be displayed on the "a" small screens arranged in the vertical direction.

17. The display apparatus according to claim 16, wherein, in response to a vertical flicking operation performed by a user on the screen, the display content selecting unit sequentially switches categories of the pieces of content being displayed on the "a" small screens.

18. The display apparatus according to claim 16, wherein, in response to a horizontal flicking operation that is performed after a user selects a specific small screen, the display content selecting unit increments or decrements the channel number of the piece of content being displayed on the specific small screen in accordance with the number of times the flicking operation is performed, while the category of the content being displayed on the specific small screen remains the same.

19. A display method comprising:

a content management step of managing pieces of content that can be displayed on a screen having a predetermined aspect ratio;
a content display control step of controlling display of content in accordance with a state of the screen; and
a display content selection step of selecting content to be displayed on the screen from among the pieces of content being managed in the content managing step, in accordance with an instruction issued in the content display control step.

20. A computer program written in a computer-readable format,
the computer program causing a computer to function as:

a content managing unit configured to manage pieces of content that can be displayed on a screen having a predetermined aspect ratio;
a content display control unit configured to control display of content in accordance with a state of the screen; and
a display content selecting unit configured to select content to be displayed on the screen from among the pieces of content being managed by the content managing unit, in accordance with an instruction from the content display control unit.

# FIG. 1

INFORMATION PROCESSING APPARATUS 100

NETWORK CABLE

PROXIMITY SENSOR

DISTANCE SENSOR

POWER CABLE

REMOTE CONTROLLER

ATTACHMENT/ DETACHMENT

ROTATION

ROTATION/ATTACHMENT MECHANISM UNIT 200

TOUCH SENSOR

CAMERA

EP 2 927 902 A1

FIG. 2

# FIG. 3

PROXIMITY SENSOR

PROXIMITY SENSOR

PROXIMITY SENSOR

MOBILE TERMINAL

WIRELESS COMMUNICATION

CAMERA

PROXIMITY SENSOR

NETWORK CABLE

POWER CABLE

ROTATION/ATTACHMENT
MECHANISM UNIT 200 (ACCESS POINT)

EP 2 927 902 A1

# FIG. 4

FIG. 5

INFORMATION PROCESSING DEVICE 100

INPUT INTERFACE UNIT 110

ARITHMETIC OPERATION UNIT 120

BUS 190

STORAGE UNIT 140

COMMUNICATION UNIT 150

POWER SUPPLY UNIT 160

TELEVISION TUNER UNIT 170

VIDEO INTERFACE UNIT 180

OUTPUT INTERFACE UNIT 130

TABLET TERMINAL

MOBILE TERMINAL

(TRIPLE SCREEN)

BD REPRODUCING DEVICE

EP 2 927 902 A1

EP 2 927 902 A1

# FIG. 6

REMOTE CONTROLLER

FACE
MOVEMENT OF HAND

VOICE

USER  OBJECT

USER-OWNED TERMINAL

INPUT INTERFACE UNIT 110

| REMOTE CONTROL RECEIVING UNIT 501 | → | SIGNAL ANALYZING UNIT 501 | → |
| CAMERA UNIT 503 | → | IMAGE RECOGNIZING UNIT 504 | → |
| MICROPHONE UNIT 505 | → | SOUND RECOGNIZING UNIT 506 | → |
| DISTANCE SENSOR 507 | → | SIGNAL ANALYZING UNIT 508 | → |
| TOUCH DETECTING UNIT 509 | → | SIGNAL ANALYZING UNIT 510 | → |
| PROXIMITY SENSOR 511 | → | SIGNAL ANALYZING UNIT 512 | → |
| ULTRASHORT-DISTANCE COMMUNICATION UNIT 513 | → | SIGNAL ANALYZING UNIT 514 | → |
| TRIAXIAL SENSOR UNIT 515 | → | SIGNAL ANALYZING UNIT 517 | → |
| GPS RECEIVING UNIT 516 | | |

INPUT INTERFACE INTEGRATING UNIT 520

25

# FIG. 7

CONTENT DISPLAY UNIT 601

GUI DISPLAY UNIT 602

DISPLAY UNIT 603

SPEAKER UNIT 604

ROTATION/ATTACHMENT MECHANISM UNIT 200

ULTRASHORT-DISTANCE COMMUNICATION UNIT 513

USER-OWNED TERMINAL

OUTPUT INTERFACE INTEGRATING UNIT 610

OUTPUT INTERFACE UNIT 130

# FIG. 8

INFORMATION PROCESSING
APPARATUS 100

CONTENT
#1

TOUCH SENSOR

CONTENT
#2

CAMERA

CONTENT
#3

REMOTE
CONTROLLER

FIG. 9

# FIG. 10

INFORMATION PROCESSING APPARATUS 100
(DISPLAY SCREEN/TOUCH PANEL)

# FIG. 11

INFORMATION PROCESSING APPARATUS 100
(DISPLAY SCREEN/TOUCH PANEL)

CONTENT
#1-3

CONTENT
#1-2

CONTENT
#1-1

CONTENT
#2

CONTENT
#3

# FIG. 12

| | | | | | | |
|---|---|---|---|---|---|---|
| #(N-4)-3 | #(N-4)-2 | #(N-4)-1 | #(N-4) | #(N-4)+1 | #(N-4)+2 | #(N-4)+3 |
| #(N-3)-3 | #(N-3)-2 | #(N-3)-1 | #(N-3) | #(N-3)+1 | #(N-3)+2 | #(N-3)+3 |
| #(N-2)-3 | #(N-2)-2 | #(N-2)-1 | #(N-2) | #(N-2)+1 | #(N-2)+2 | #(N-2)+3 |
| #(N-1)-3 | #(N-1)-2 | #(N-1)-1 | #(N-1) | #(N-1)+1 | #(N-1)+2 | #(N-1)+3 |
| #1-3 | #1-2 | #1-1 | #1 | #1+1 | #1+2 | #1+3 |
| #2-3 | #2-2 | #2-1 | #2 | #2+1 | #2+2 | #2+3 |
| #3-3 | #3-2 | #3-1 | #3 | #3+1 | #3+2 | #3+3 |
| #4-3 | #4-2 | #4-1 | #4 | #4+1 | #4+2 | #4+3 |
| #5-3 | #5-2 | #5-1 | #5 | #5+1 | #5+2 | #5+3 |
| #6-3 | #6-2 | #6-1 | #6 | #6+1 | #6+2 | #6+3 |

# FIG. 13

| | | | | | | |
|---|---|---|---|---|---|---|
| #(N-4)-3 | #(N-4)-2 | #(N-4)-1 | #(N-4) | #(N-4)+1 | #(N-4)+2 | #(N-4)+3 |
| #(N-3)-3 | #(N-3)-2 | #(N-3)-1 | #(N-3) | #(N-3)+1 | #(N-3)+2 | #(N-3)+3 |
| #(N-2)-3 | #(N-2)-2 | #(N-2)-1 | #(N-2) | #(N-2)+1 | #(N-2)+2 | #(N-2)+3 |
| #(N-1)-3 | #(N-1)-2 | #(N-1)-1 | #(N-1) | #(N-1)+1 | #(N-1)+2 | #(N-1)+3 |
| #1-3 | #1-2 | #1-1 | #1 | #1+1 | #1+2 | #1+3 |
| #2-3 | #2-2 | #2-1 | #2 | #2+1 | #2+2 | #2+3 |
| #3-3 | #3-2 | #3-1 | #3 | #3+1 | #3+2 | #3+3 |
| #4-3 | #4-2 | #4-1 | #4 | #4+1 | #4+2 | #4+3 |
| #5-3 | #5-2 | #5-1 | #5 | #5+1 | #5+2 | #5+3 |
| #6-3 | #6-2 | #6-1 | #6 | #6+1 | #6+2 | #6+3 |

## FIG. 14

| | | | | | | |
|---|---|---|---|---|---|---|
| #(N−4)−3 | #(N−4)−2 | #(N−4)−1 | #(N−4) | #(N−4)+1 | #(N−4)+2 | #(N−4)+3 |
| #(N−3)−3 | #(N−3)−2 | #(N−3)−1 | #(N−3) | #(N−3)+1 | #(N−3)+2 | #(N−3)+3 |
| #(N−2)−3 | #(N−2)−2 | #(N−2)−1 | #(N−2) | #(N−2)+1 | #(N−2)+2 | #(N−2)+3 |
| #(N−1)−3 | #(N−1)−2 | #(N−1)−1 | #(N−1) | #(N−1)+1 | #(N−1)+2 | #(N−1)+3 |
| #1−4 | #1−3 | #1−2 | #1−1 | #1 | #1+1 | #1+2 |
| #2−3 | #2−2 | #2−1 | #2 | #2+1 | #2+2 | #2+3 |
| #3−3 | #3−2 | #3−1 | #3 | #3+1 | #3+2 | #3+3 |
| #4−3 | #4−2 | #4−1 | #4 | #4+1 | #4+2 | #4+3 |
| #5−3 | #5−2 | #5−1 | #5 | #5+1 | #5+2 | #5+3 |
| #6−3 | #6−2 | #6−1 | #6 | #6+1 | #6+2 | #6+3 |

## FIG. 15

ROTATION/ATTACHMENT
MECHANISM UNIT 200

*FIG. 16*

EP 2 927 902 A1

## FIG. 17

PINCH IN

PINCH OUT OR TAP

#1

#2

#3

FIG. 18

*FIG. 19*

1ch 2ch 3ch

UPWARD FLICK ONCE

+1 +1 +1

2ch 3ch 4ch

UPWARD FLICK ONCE

+1 +1 +1

3ch 4ch 5ch

DOWNWARD FLICK ONCE

−1 −1 −1

1ch 2ch 3ch

FIG. 20

# FIG. 21

| 2ch | |
|---|---|
| 4ch | |
| 6ch | |

MOVE

MOVE

CENTER TIER+1

「↑」
UPWARD FLICK
ONCE

| 4ch |
|---|
| 6ch |
| 7ch |

MOVE

MOVE

CENTER TIER+1

「↑」
UPWARD FLICK
ONCE

| 6ch |
|---|
| 7ch |
| 8ch |

CENTER TIER−1

MOVE

MOVE

「↓」
DOWNWARD FLICK
ONCE

| 5ch |
|---|
| 6ch |
| 7ch |

## FIG. 22

BOTTOM TIER SELECTED
and
RIGHTWARD FLICK, ONCE

CENTER TIER SELECTED
and
LEFTWARD FLICK, ONCE

TOP TIER SELECTED
and
LEFTWARD FLICK, ONCE

FIG. 23

EP 2 927 902 A1

EP 2 927 902 A1

# FIG. 24

| A-1ch |
| B-1ch |
| C-1ch |

BOTTOM TIER SELECTED
and
RIGHTWARD FLICK, ONCE

+1

| A-1ch |
| B-1ch |
| C-2ch |

CENTER TIER SELECTED
and
LEFTWARD FLICK, ONCE

−1

| A-1ch |
| B-20ch |
| C-2ch |

TOP TIER SELECTED
and
LEFTWARD FLICK, ONCE

−1

| A-30ch |
| B-2ch |
| C-2ch |

FIG. 25

# FIG. 26

CONTENT

( COMMUNICATION UNIT 150
TELEVISION TUNER UNIT 170
VIDEO INTERFACE UNIT 180 )

CONTENT
MANAGING UNIT
2601

USER OPERATION

( TOUCH PANEL
REMOTE CONTROLLER
GESTURE INPUT )

DISPLAY CONTENT
SELECTING UNIT
2602

ROTATIONAL POSITION
OF LARGE SCREEN

( TRIAXIAL SENSOR 515
ROTATION/ATTACHMENT
MECHANISM UNIT 200 )

CONTENT DISPLAY
CONTROL UNIT
2603

DISPLAY UNIT 603

# FIG. 27

INPUT IMAGE 2701 FROM PC

SMALL WINDOW (TELEVISION PROGRAM) 2702

# FIG. 28

SMALL WINDOW
(OUTSIDE VIDEO) 2801

SMALL WINDOW
(TELEVISION PROGRAM) 2802

# FIG. 29

## FIG. 30

<table>
<tr><td colspan="2" align="center">**INTERNATIONAL SEARCH REPORT**</td><td>International application No.<br><br>PCT/JP2013/078023</td></tr>
</table>

| | |
|---|---|
| **A. CLASSIFICATION OF SUBJECT MATTER**<br>*G09G5/00*(2006.01)i, *G06F3/048*(2013.01)i, *G06F3/14*(2006.01)i, *G09G5/14* *(2006.01)i*, *G09G5/36*(2006.01)i, *G09G5/38*(2006.01)i, *H04N5/66*(2006.01)i<br><br>According to International Patent Classification (IPC) or to both national classification and IPC | |

**B. FIELDS SEARCHED**

| |
|---|
| Minimum documentation searched (classification system followed by classification symbols)<br>G09G5/00, G06F3/048, G06F3/14, G09G5/14, G09G5/36, G09G5/38, H04N5/66 |

| |
|---|
| Documentation searched other than minimum documentation to the extent that such documents are included in the fields searched<br>Jitsuyo Shinan Koho          1922–1996   Jitsuyo Shinan Toroku Koho   1996–2014<br>Kokai Jitsuyo Shinan Koho   1971–2014   Toroku Jitsuyo Shinan Koho   1994–2014 |

| |
|---|
| Electronic data base consulted during the international search (name of data base and, where practicable, search terms used) |

**C. DOCUMENTS CONSIDERED TO BE RELEVANT**

| Category* | Citation of document, with indication, where appropriate, of the relevant passages | Relevant to claim No. |
|---|---|---|
| X | JP 2005-524164 A  (Koninklijke Philips Electronics N.V.), 11 August 2005 (11.08.2005), paragraphs [0005] to [0025]; fig. 1 to 4 & US 2005/0156948 A1    & EP 1502431 A & WO 2003/092268 A2    & CN 1669306 A | 1-5,11-12, 19-20 |
| X | JP 2008-20901 A  (Matsushita Electric Industrial Co., Ltd.), 31 January 2008 (31.01.2008), claim 1; paragraphs [0062] to [0063], [0150] to [0151]; fig. 2 to 3, 27 & US 2007/0285533 A1 | 1-2,4,19-20 |

| | | |
|---|---|---|
| ☒   Further documents are listed in the continuation of Box C. | ☐   See patent family annex. | |

| | |
|---|---|
| *     Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| | |
|---|---|
| Date of the actual completion of the international search<br>14 January, 2014 (14.01.14) | Date of mailing of the international search report<br>21 January, 2014 (21.01.14) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2013/078023 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2009-69842 A  (Sharp Corp.),<br>02 April 2009 (02.04.2009),<br>paragraphs [0133] to [0140]; fig. 5 to 8<br>(Family: none) | 1-2,4,19-20 |
| X | JP 2008-192034 A  (Sharp Corp.),<br>21 August 2008 (21.08.2008),<br>paragraphs [0038] to [0040]; fig. 5<br>(Family: none) | 1-2,4,19-20 |
| P,X | WO 2013/105443 A1  (Sony Corp.),<br>18 July 2013 (18.07.2013),<br>paragraphs [0034] to [0071]; fig. 1 to 6<br>(Family: none) | 1-5,11-12,<br>19-20 |
| P,X | JP 2013-117690 A  (Business Breakthrough, Inc.),<br>13 June 2013 (13.06.2013),<br>paragraphs [0007], [0012]; fig. 2 to 3<br>(Family: none) | 1-2,19-20 |
| A | JP 2004-226494 A  (Honko Mfg. Co., Ltd.),<br>12 August 2004 (12.08.2004),<br>entire text; all drawings<br>& US 2005/0212822 A1    & WO 2003/102915 A1 | 1-20 |
| A | JP 10-285514 A  (Matsushita Electric Industrial<br>Co., Ltd.),<br>23 October 1998 (23.10.1998),<br>entire text; all drawings<br>& WO 1998/046022 A1     & KR 10-2000-0016447 A<br>& CN 1223053 A | 1-20 |

Form PCT/ISA/210 (continuation of second sheet) (July 2009)

**EP 2 927 902 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3526056 B
- JP 11024577 A
- JP 2003157016 A
- JP 2011017738 A